# EUROPEAN PATENT APPLICATION

(11) **EP 4 542 357 A1**
(43) Date of publication of application: **23.04.2025**
(21) Application number: 24730856.2
(22) Date of filing: 30.05.2024
(51) Int. Cl.: G06F 3/0484, G06F 3/14, G06F 3/041

(54) **ELECTRONIC DEVICE AND METHOD FOR DISPLAYING SCREEN ON BASIS OF ROTATION OF HOUSING**

(30) Priority: 30.08.2023 KR 20230114999; 27.09.2023 KR 20230131093
(71) Applicant: Samsung Electronics Co., Ltd., Suwon-si, Gyeonggi-do 16677 (KR)
(72) Inventor: JEONG, Jongil, Suwon-si Gyeonggi-do 16677 (KR); BANG, Hyosang, Suwon-si Gyeonggi-do 16677 (KR)
(74) Representative: Gulde & Partner
(86) International application number: PCT/KR2024/007396
(87) International publication number: WO 2025/048136

(57) **Abstract**

According to an embodiment, in an unfolded state, a processor of an electronic device displays a first screen for executing an application on a first displaying region, a second displaying region, and a third displaying region of a flexible display in an unfolded state of a first housing, a second housing, and a third housing. The processor displays a notification event on at least one of the first displaying region, the second displaying region, and the third displaying region, based on occurrence of the notification event while executing the application. The processor identifies that the first housing and the third housing is changed from the unfolded state to a semi-folded state by a predetermined angle, while the notification event is displayed on at least one displaying region. The processor displays the notification event on the first displaying region or the third displaying region based on changing to the semi-folded state.

## Description

### [Technical Field]

The present disclosure relates to an electronic device for displaying a screen based on a rotation of a housing and a method thereof.

### [Background Art]

Shapes and/or sizes of electronic devices are diversifying. In order to enhance mobility, an electronic device having a reduced size and/or volume is being designed. The electronic device may include a display for visualizing information. As the number of functions supported by the electronic device increases, a size of the display may increase in order to visualize more information to a user and/or to support execution of the functions. For example, the size of the display may be designed to be maintained or increased while reducing the size and/or volume of the electronic device.

The above-described information may be provided for the purpose of helping to understand the present disclosure. No claim or determination is raised as to whether any of the above-described information may be applied as a prior art related to the present disclosure.

### [Disclosure]

### [Technical Solution]

According to an embodiment, an electronic device may comprise a multi-foldable housing including a first housing, a second housing rotatably coupled to the first housing, and a third housing rotatably coupled to the second housing; a flexible display including a first displaying region supported by the first housing, a second displaying region supported by the second housing and a third displaying region supported by the third housing; a first sensor sensing a first angle between the first housing and the second housing; a second sensor sensing a second angle between the second housing and the third housing; memory for storing instructions; and a processor for executing the instructions by accessing the memory. The instructions, when executed by the processor, may cause the processor to display, in an unfolded state of the first housing, the second housing and the third housing, a first screen executing an application on the first displaying region, the second displaying region and the third displaying region of the flexible display. The instructions, when executed by the processor, may cause the processor to display the notification event in at least one displaying region of the first displaying region, the second displaying region and the third displaying region, based on occurrence of a notification event while executing the application. The instructions, when executed by the processor, may cause the processor to, while displaying the notification event in the at least one displaying region, identify that at least one of the first housing and the third housing is changed from the unfolded state to a semi-folding state according to a preset angle based on the second housing. The instructions, when executed by the processor, may cause the processor to display the notification event in the first displaying region or the third displaying region, based on changing to the semi-folding state.

According to an embodiment, a method of an electronic device may comprise displaying, in an unfolded state of a first housing, a second housing and a third housing of the electronic device, a first screen executing an application in a first displaying area supported by the first housing, a second displaying area supported by the second housing and a third housing supported by the flexible display. The method may comprise, based on occurrence of a notification event while executing the application, displaying the notification event in at least one displaying region of the first displaying region, the second displaying region and the third displaying region. The method may comprise, while displaying the notification event in the at least one displaying region, identifying that at least one of the first housing and the third housing is changed from the unfolded state to a semi-folding state according to a preset angle based on the second housing. The method may comprise, based on changing to the semi-folding state, displaying the notification event in the first displaying region or the third displaying region.

According to an embodiment, an electronic device may comprise a first housing, a second housing rotatably coupled to the first housing, a third housing rotatably coupled to the second housing, a flexible display positioned on a first surface of the first housing, a second surface of the second housing and a third surface of the third housing, a cover display positioned on a fourth surface of the first housing opposite to the first surface, a plurality of sensors, memory for storing instructions, and a processor for executing the instructions by accessing the memory. The processor may be configured to display, in an unfolded state checked by the plurality of sensors, a first screen having a size of entire displaying region of the flexible display on the flexible display. The processor may be configured to, while displaying the first screen in the unfolded state, display, based on the first surface and the second surface which are folded longer than a preset period, a second screen associated with the first screen on the cover display together with the first screen displayed on the flexible display.

According to an embodiment, a method of an electronic device may comprise displaying, in an unfolded state of the electronic device, a first screen having a size of entire displaying region of a flexible display on the flexible display positioned on a first surface of a first housing of the electronic device, a second surface of a second housing rotatably coupled to the first housing, and a third surface of a third housing rotatably coupled to the second housing. The method may comprise, while displaying the first screen in the unfolded state, displaying, based on the first surface and the second surface which are folded longer than a preset period, a second screen associated with the first screen on a cover display positioned on a fourth surface of the first housing opposite to the first surface, together with the first screen displayed on the flexible display.

### [Description of the Drawings]

FIG. 1 illustrates an embodiment of a deformable electronic device.
FIG. 2 illustrates an example of a block diagram of an electronic device, according to an embodiment.
FIGS. 3A, 3B, and 3C illustrate an embodiment of a deformable electronic device.
FIG. 4 illustrates a flowchart of an electronic device, according to an embodiment.
FIG. 5 illustrates an exemplary flowchart for describing an operation of an electronic device based on a program, according to an embodiment.
FIGS. 6A and 6B illustrate an example of an operation of an electronic device for obtaining information associated with an angle between housings.
FIGS. 7A and 7B exemplarily illustrate states of an electronic device switched based on rotation between housings.
FIG. 8 exemplarily illustrates states of an electronic device switched based on rotation between housings.
FIGS. 9A and 9B exemplarily illustrate states of an electronic device switched based on rotation between housings.
FIG. 10 exemplarily illustrates states of an electronic device switched based on rotation between housings.
FIG. 11 exemplarily illustrates states of an electronic device switched based on rotation between housings.
FIG. 12 illustrates an embodiment of a deformable electronic device.
FIG. 13 is a block diagram of an electronic device in a network environment according to various embodiments.

### [Mode for Invention]

Hereinafter, various embodiments of the present document will be described with reference to accompanying drawings.

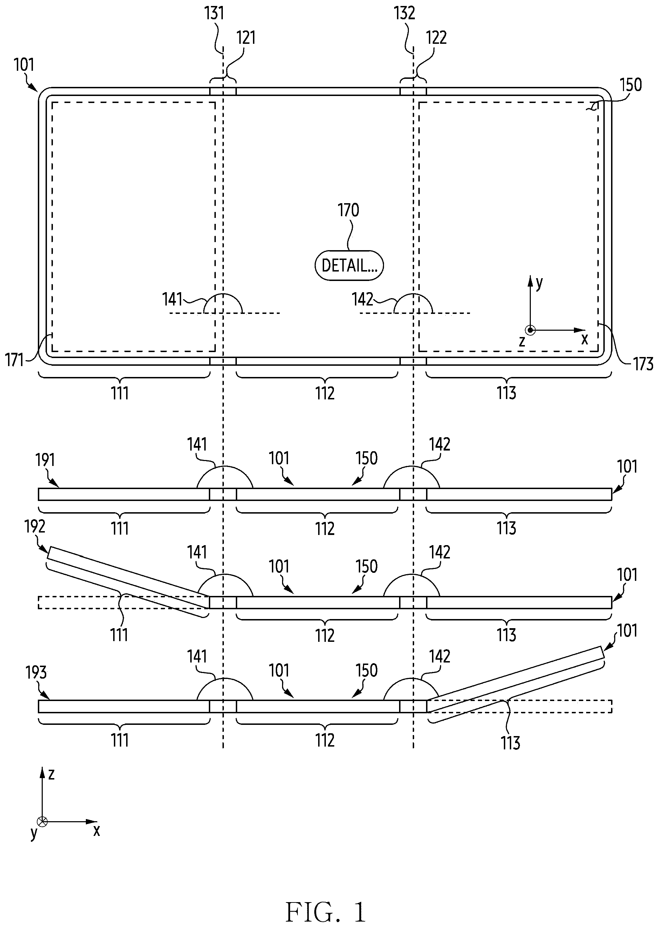

FIG. 1 illustrates an embodiment of a deformable electronic device 101. In terms of being owned by a user, the electronic device 101 may be referred to as a terminal (or a user terminal), a user equipment (UE), or the like. For example, the terminal may include a personal computer (PC) such as a laptop and a desktop. For example, the terminal may include a smartphone, a smart pad, and/or a tablet PC. The terminal may include a smart accessory such as a smartwatch and/or a head-mounted device (HMD).

Referring to FIG. 1, according to an embodiment, the electronic device 101 may include a deformable multi-foldable housing. Based on deformability, the multi-foldable housing may be divided into a plurality of parts (or combinations and/or portions). For example, the multi-foldable housing of the electronic device 101 of FIG. 1 may include a first housing 111, a second housing 112, and a first hinge assembly 121 for rotatably coupling the first housing 111 and the second housing 112. By the first hinge assembly 121, a relative location, position (or posture), angle, shape, and/or distance of the first housing 111 and the second housing 112, which are rigid bodies, may be changed by an external force.

Referring to FIG. 1, the multi-foldable housing of the electronic device 101 may include a second housing 112, a third housing 113, and a second hinge assembly 122 for rotatably coupling the second housing 112 and the third housing 113. By the second hinge assembly 122, a relative location, position (or posture), angle, shape, and/or distance of the second housing 112 and the third housing 113 may be changed by an external force. Based on the first hinge assembly 121 and the second hinge assembly 122, the electronic device 101 may have a structure capable of being folded more than once. However, the multi-foldable housing is not restricted to three housing but may also comprise four, five, or more housings. In an embodiment, a housing such as the first housing 111, the second housing 112, and the third housing 113 may be referred to as a housing assembly (or housing combination, housing parts, and/or housing assembly), a sub-housing, a flat housing, and/or a rigid housing. In an embodiment, a hinge assembly including the first hinge assembly 121 and the second hinge assembly 122 may be referred to as a hinge housing, a joint housing, and/or a flexible housing.

Referring to FIG. 1, a first folding axis 131 may be a rotation axis of the first housing 111 and the second housing 112 connected through the first hinge assembly 121, and may be located within the first hinge assembly 121. As the first housing 111 and/or the second housing 112 are rotated with respect to the first folding axis 131, a first angle 141 between the first housing 111, the first hinge assembly 121, and the second housing 112 may be changed. A second folding axis 132 may be a rotation axis of the second housing 112 and the third housing 113 connected through the second hinge assembly 122, and may be located within the second hinge assembly 122. As the second housing 112 and/or the third housing 113 are rotated with respect to the second folding axis 132, a second angle 142 between the second housing 112, the second hinge assembly 122, and the third housing 113 may be changed. In terms of including a plurality of deformable folding axes, such as the first folding axis 131 and the second folding axis 132, the electronic device 101 may be referred to as a multi-foldable electronic device. The first angle 141 and the second angle 142 may be changed independently from each other.

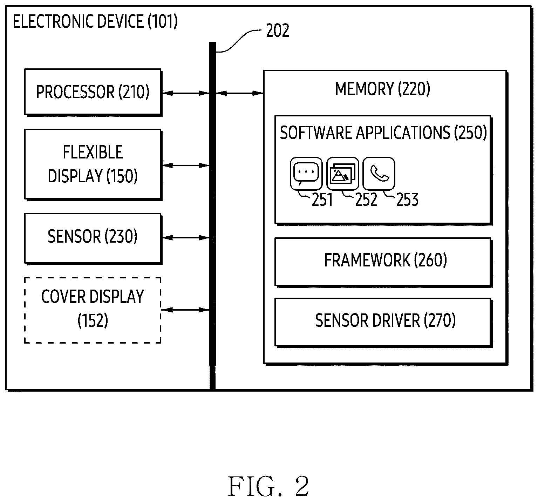

Referring to FIG. 1, according to an embodiment, the electronic device 101 may include a flexible display 150 positioned on a surface (e.g., a front surface of the electronic device 101) of the first housing 111, the second housing 112, and the third housing 113. For example, the flexible display 150 may be extended from the first housing 111 to the third housing 113 across the second housing 112. The flexible display 150 may form at least a portion of front surfaces of the first housing 111, the second housing 112, and the third housing 113. For example, the flexible display 150 may be positioned from the first housing 111 to the third housing 113 across the first hinge assembly 121, the second housing 112, and the second hinge assembly 122. Hereinafter, the first angle 141 may correspond to an angle between a surface of the first housing 111 and a surface of the second housing 112 on which the flexible display 150 capable of being folded by the first folding axis 131 of the first hinge assembly 121 is positioned. Hereinafter, the second angle 142 may correspond to an angle between a surface of the second housing 112 and a surface of the third housing 113 on which the flexible display 150 capable of being folded by the second folding axis 132 of the second hinge assembly 122 is positioned. In an embodiment, the flexible display 150 may be referred to as a display, a deformable display, and/or a deformable panel. An exemplary hardware configuration of the electronic device 101 for controlling the flexible display 150 will be described with reference to FIG. 2.

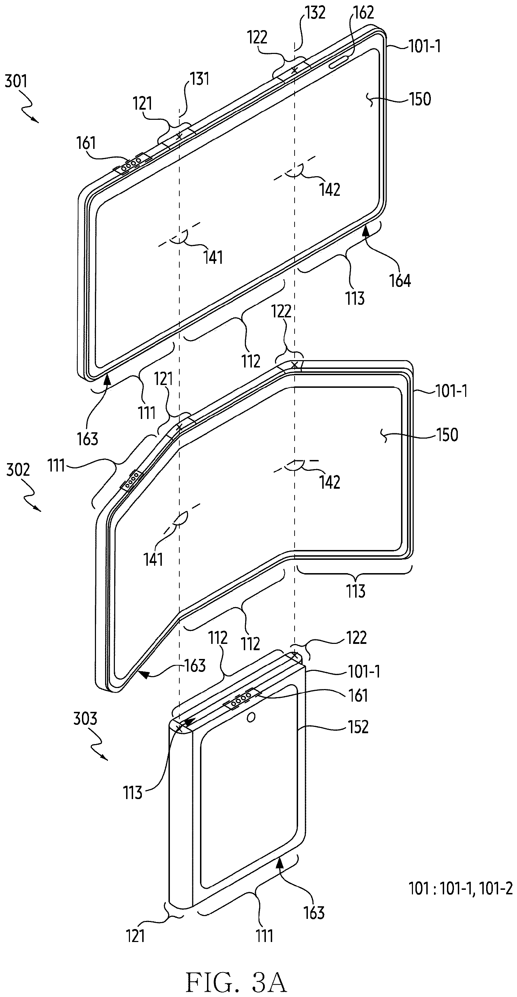

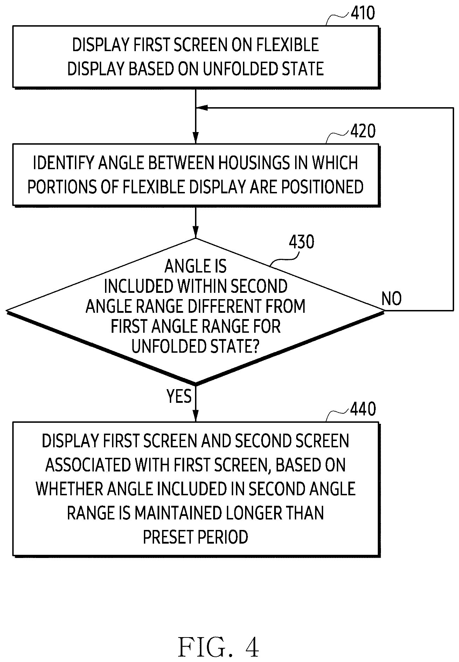

Referring to FIG. 1, the position and/or shape of the electronic device 101 and/or the flexible display 150 may be distinguished by the first angle 141 and/or the second angle 142. A state of the electronic device 101 distinguished by the first angle 141 and/or the second angle 142 will be described with reference to FIGS. 3A to 3C. According to an embodiment, the electronic device 101 may display one or more screens displayed on the flexible display 150, based on rotation of the first folding axis 131 and/or the second folding axis 132. An operation performed by the electronic device 101 based on the rotation of the first folding axis 131 and/or the second folding axis 132 will be described with reference to FIGS. 4 to 12.

Referring to FIG. 1, a front surface of the electronic device 101 viewed from z-axis (e.g., viewed from +z direction) and a side surface of the electronic device 101 viewed from y-axis (e.g., viewed from -y direction) are illustrated. In a state 191 in which the first angle 141 and the second angle 142 are substantially a straight angle (about 180 °), the electronic device 101 may display a screen using the entire displaying region (e.g., active region, active area, displaying region, and/or displaying area) of the flexible display 150. For example, in the state 191, a screen (e.g., window and/or activity) provided from a software application (hereinafter referred to as application) may be displayed in the entire displaying region of the flexible display 150.

Referring to FIG. 1, the electronic device 101 may detect or identify a change in the state, shape, mode, and/or position of the electronic device 101, based on a physical rotation of the first folding axis 131 and/or the second folding axis 132. For example, in the state 191, the electronic device 101 may identify a rotation of the first housing 111 with respect to the second housing 112. In an embodiment, in a state 192 switched from the state 191 based on the rotation, the electronic device 101 may display a second screen associated with the first screen that was displayed in the state 191. For example, after a preset period (or duration) (e.g., a period of about 1.5 seconds) from a timing switched to the state 192, the electronic device 101 may display the second screen on a portion 171 of the flexible display 150 positioned on the first housing 111, which is distinguished by the first folding axis 131 rotated in the state 192. For example, when switching to another state (e.g., state 191) distinguished from the state 192 within the preset period from the timing switched to the state 192, the electronic device 101 may not display the second screen.

For example, in the state 191, the electronic device 101 may identify a rotation of the third housing 113 with respect to the second housing 112. In an embodiment, in the state 193 switched from the state 191 based on the rotation, the electronic device 101 may display the second screen associated with the first screen that was displayed in the state 191. For example, after a preset period from a timing switched from the state 193, the electronic device 101 may display the second screen on a portion 173 of the flexible display 150 positioned on the third housing 113, which is distinguished by the second folding axis 132 rotated in the state 193. For example, when switching to another state (e.g., state 191) distinguished from the state 193 within the preset period from the timing, the electronic device 101 may not display the second screen. Although not illustrated in FIG. 1, a rotation of the first housing 111 with respect to the second housing 112 and/or of the third housing 113 with respect to the second housing 112 may be such that the first angle 141 and/or the second angle 142 is more than 180 °. In other words, an out-folding operation may also be performed.

In an embodiment, in the state 192 and/or the state 193, the second screen displayed with the first screen may be associated with content of the first screen. For example, in the state 191 of displaying the first screen including a visual object (e.g., a button 170) for interacting with a user, after switching to at least one of the states 192 and 193, the electronic device 101 may display a second screen associated with the visual object. In the states 192 and 193 that provide flat portions distinguished by the first folding axis 131 and/or the second folding axis 132, the electronic device 101 may simultaneously display a second screen associated with the first screen in each of the flat portions, together with the first screen that was displayed in the state 191 before the states 192 and 193. By simultaneously displaying the first screen and the second screen, the electronic device 101 may provide a user experience based on multi-tasking. When switching to the state 191 from any one of the states 192 and 193 that provide both the first screen and the second screen, the electronic device 101 may cease to display the second screen additionally displayed in the states 192 and 193, and display the first screen in the entire displaying region of the flexible display 150.

Hereinafter, referring to FIG. 2, an example of a hardware configuration included in the electronic device 101 for performing the operation described with reference to FIG. 1 will be described.

FIG. 2 illustrates an example of a block diagram of an electronic device 101, according to an embodiment. The electronic device 101 of FIG. 1 may include a hardware of the electronic device 101 described with reference to FIG. 2. Referring to FIG. 2, according to an embodiment, the electronic device 101 may include at least one of a processor 210, a memory 220, a flexible display 150, and a sensor 230. The processor 210, the memory 220, the flexible display 150, and the sensor 230 may be electrically, communicatively and/or operably coupled with each other by an electronic component such as a communication bus 202. The embodiment is not limited thereto, and the electronic device 101 may further include a cover display 152.

In an embodiment, the operational coupling of hardware components of the electronic device 101 may mean that a direct connection or an indirect connection between the hardware components is established wiredly or wirelessly so that a second hardware component among the hardware components is controlled by a first hardware component. Although illustrated based on different blocks, the embodiment is not limited thereto, and a part of the hardware (e.g., at least part of the processor 210 and the memory 220) of FIG. 2 may be included in a single integrated circuit (SoC), such as a system on chip (SoC). The hardware components of the electronic device 101 divided into blocks may be located or included in at least one of the first housing 111, the second housing 112, or the third housing 113 described with reference to FIG. 1. The type and/or number of the hardware components included in the electronic device 101 is not limited to those illustrated in FIG. 2. For example, the electronic device 101 may include only a part of the hardware components illustrated based on the blocks of FIG. 2.

According to an embodiment, the processor 210 of the electronic device 101 may include a hardware and/or a circuit for processing data based on one or more instructions. For example, the hardware and/or the circuit for processing data may include an arithmetic and logic unit (ALU), a floating point unit (FPU), a field programmable gate array (FPGA), a central processing unit (CPU), and/or an application processor (AP). The number of processors 210 may be one or more. For example, the processor 210 may have a structure of a multi-core processor such as a dual core, a quad core, a hexa core, or an octa core.

According to an embodiment, the memory 220 of the electronic device 101 may include a hardware component for storing data and/or instructions inputted to the processor 210 or outputted from the processor 210. For example, the memory 220 may include a volatile memory such as random-access memory (RAM) and/or a non-volatile memory such as read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), and an embedded multi-media card (eMMC).

According to an embodiment, the flexible display 150 of the electronic device 101 may output visualized information (e.g., screens of FIG. 1, FIG. 7A, FIG. 7B, FIG. 8, FIG. 9A, FIG. 9B, and FIGS. 10 to 13) to the user. For example, the flexible display 150 may output visualized information to the user by being controlled by a controller such as a graphic processing unit (GPU) and/or the processor 210. For example, the flexible display 150 may include a liquid crystal display (LCD), a plasma display panel (PDP), and/or one or more light emitting diode (LED). The LED may include an organic LED (OLED). For example, the flexible display 150 may include electronic paper. As described above with reference to FIG. 1, the flexible display 150 may have at least a partially curved shape, and/or a deformable shape. Hereinafter, an active region (or active area) and/or a displaying area of the flexible display 150 may correspond to at least a portion of the flexible display 150 including one or more pixels activated (or enabled).

According to an embodiment, the flexible display 150 of the electronic device 101 may include a sensor (e.g., a touch sensor panel (TSP)) for detecting an external object (e.g., a user's finger) on the flexible display 150. For example, based on the TSP, the electronic device 101 may detect an external object in contact with the flexible display 150 or floating on the flexible display 150. In response to detecting the external object, the electronic device 101 may execute a function associated with a specific visual object corresponding to a location of the external object on the flexible display 150 among the visual objects displayed in the flexible display 150.

According to an embodiment, the cover display 152 of the electronic device 101 may be positioned on a surface opposite to one surface of the housing of the electronic device 101 on which the flexible display 150 is positioned. A surface on which the cover display 152 is positioned may be referred to as a front surface (or a front side) of the electronic device 101, and another surface on which the flexible display 150 is positioned may be referred to as a rear surface (or a rear side (or a back surface)) of the electronic device 101. The embodiment is not limited thereto, and the surface of the electronic device 101 on which the flexible display 150 is positioned may be referred to as the front surface, and the other surface of the electronic device 101 on which the cover display 152 is positioned may be referred to as the rear surface. The cover display 152 may include a circuit for visualizing information, similar to the flexible display 150. The electronic device 101 may include a touch sensor (e.g., a capacitive touch sensor or a resistive touch sensor) for identifying an external object (e.g., a body part such as a user's finger) adjacent to or in contact with the cover display 152. Among the description of the cover display 152, descriptions overlapping those description of the flexible display 150 may be omitted.

According to an embodiment, the sensor 230 of the electronic device 101 may generate electronic information capable of being processed by the processor 210 or stored in the memory 220 from non-electronic information associated with the electronic device 101. For example, the sensor 230 may include a global positioning system (GPS) sensor for detecting a geographic location of the electronic device 101. For example, in addition or as an alternative to the GPS scheme, the sensor 230 may generate information indicating the geographic location of the electronic device 101 based on a global navigation satellite system (GNSS) such as Galileo or Beidou (or Compass). The information may be stored in the memory 220, processed by the processor 210, or transmitted to another electronic device distinct from the electronic device 101 through the communication circuit 240. The sensor 230 is not limited to the described above, and may include an image sensor, an illuminance sensor, a proximity sensor, a grip sensor, a fingerprint sensor, and/or a ToF sensor for detecting electromagnetic waves including light.

In an embodiment, the processor 210 of the electronic device 101 may identify position (or posture), shape, and/or direction of the electronic device 101 using the sensor 230. The sensor 230 may include a hall sensor, a 6-degree of freedom (6-DoF) sensor, and/or an inertial measurement unit (IMU) for identifying the position, shape, and/or direction of the electronic device 101. The hall sensor may include a magnet and a magnetic field sensor that measures a change in a magnetic field formed by the magnet. The magnet and the magnetic field sensor may be disposed on different parts (or portions) of the housing of the electronic device 101. Based on the change in the magnetic field measured by the magnetic field sensor, the hall sensor may output sensor data indicating a distance between the portions.

For example, in an embodiment where the electronic device 101 includes a deformable housing, the processor 210 of the electronic device 101 may identify a shape of the housing or identify a parameter (e.g., the first angle 141 and/or the second angle 142 of FIG. 1), by using the hall sensor including the magnet and the magnetic field sensor disposed on different parts (e.g., the first housing 111, the second housing 112, and/or the third housing 113 of FIG. 1) of the housing. For example, the hall sensor may output sensor data indicating the distance and/or the shape of the housing.

According to an embodiment, the IMU may include an acceleration sensor, a gyro sensor, a geomagnetic sensor, or an any combination thereof. The acceleration sensor may output an electrical signal indicating gravitational acceleration and/or acceleration of each of a plurality of axes (e.g., x-axis, y-axis, and z-axis) perpendicular to each other. The gyro sensor may output an electrical signal indicating an angular velocity (e.g., an angular velocity based on roll, pitch, and/or yaw) of each of the plurality of axes. The geomagnetic sensor may output an electrical signal indicating magnitude of the magnetic field formed in the electronic device 101 along each of the plurality of axes (e.g., x-axis, y-axis, and/or z-axis). The processor 210 may repeatedly obtain data indicating acceleration, angular velocity, and/or magnitude of a magnetic field from the IMU, based on a preset period (e.g., 1 millisecond). The processor 210 may identify parameters (e.g., the first angle 141 and/or the second angle 142 of FIG. 1) associated with the shape of the electronic device 101 by using the hall sensor and/or the IMU. Based on the parameters, the processor 210 may identify a current shape of the electronic device 101 from among preset shapes (e.g., an unfolded state, a folded state, and/or a sub-folded state described with reference to FIGS. 3A to 3C) for distinguishing the shape of the electronic device 101. For example, the processor 210 of the electronic device 101 may identify the first angle 141 between the first housing 111 and the second housing 112 and/or the second angle 142 between the second housing 112 and the third housing 113 of FIG. 1, by using the sensor 230.

Although not illustrated, according to an embodiment, the electronic device 101 may include an output means for outputting information in a form other than a form in which information is visualized. For example, the electronic device 101 may include a motor (or haptic actuator) for providing haptic feedback based on vibration. For example, the electronic device 101 may include one or more speakers (e.g., a first speaker 161, a second speaker 162, a third speaker 163, and a fourth speaker 164 of FIGS. 3A to 3C) for outputting an audio signal.

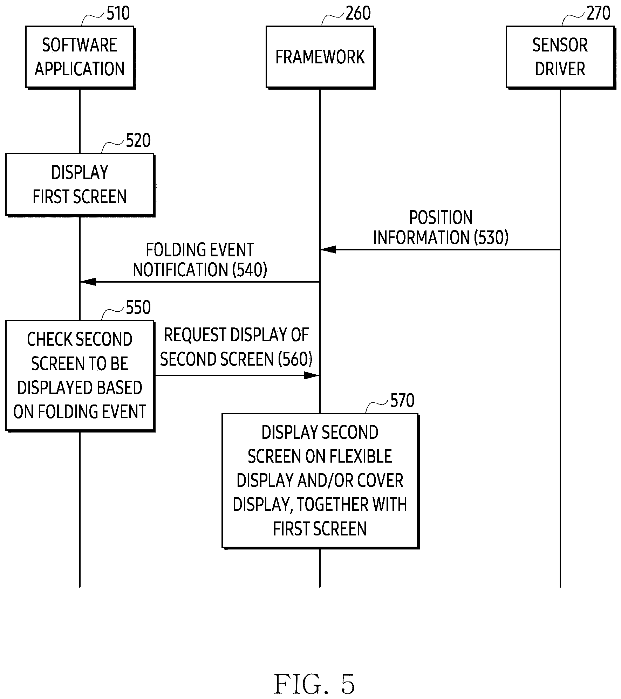

According to an embodiment, one or more instructions (or commands) indicating calculations and/or operations to be performed by the processor 210 on data may be stored in the memory 220 of the electronic device 101. For example, a set of one or more instructions may be referred to as firmware, operating system, process, routine, sub-routine, and/or software application (hereinafter referred to as an application). For example, when a set of a plurality of instructions distributed in a form of an operating system, firmware, driver, and/or application are executed, the electronic device 101 and/or processor 210 may perform at least one of operations of FIG. 4 and/or FIG. 5. Hereinafter, the application being installed in the electronic device 101 may mean that one or more instructions provided in the form of the application are stored in the memory 220 of the electronic device 101, and the one or more applications are stored in a format (e.g., a file having an extension designated by the operating system of the electronic device 101) executable by the processor 210 of the electronic device 101.

Referring to FIG. 2, programs stored in the memory 220 are illustrated as different blocks. The programs stored in the memory 220 may be divided into software applications 250 (or application software), a framework 260, and/or a sensor driver 270, based on a target. The sensor driver 270 may include a program (e.g., firmware) executed to drive one or more sensors (e.g., the sensor 230) included in the electronic device 101. The framework 260 may include a program (e.g., an operating system including system software and/or kernel), a library, and/or an application programming interface (API) for supporting control of the electronic device 101 based on the software applications 250. The software applications 250 may be installed in the electronic device 101 to execute one or more functions designed to target a user of the electronic device 101.

Referring to FIG. 2, the software applications 250 installed in the electronic device 101 are exemplarily illustrated. For example, a messenger application 251 for exchanging text message (or media content such as images, videos, and sounds) between users, such as SMS, may be installed in the electronic device 101. For example, a gallery application 252 for browsing one or more media contents (e.g., images such as photo and/or videos) stored in the memory 220 of the electronic device 101 may be installed in the electronic device 101. For example, a call application 253 for a call connection (e.g., voice over internet protocol (VoIP), voice over long term evolution (VoLTE), voice over new radio (VoNR) and/or voice over fifth generation (Vo5G)) may be installed in the electronic device 101. The embodiment is not limited thereto, and the electronic device 101 may support installation and/or execution of another software application different from the software applications 250 illustrated in FIG. 2, by using a store application for downloading, installing, and/or updating application.

In an embodiment, the processor 210 of the electronic device 101 may obtain a screen to be displayed on a display (e.g., the flexible display 150 and/or the cover display 152), based on the execution of at least one of the software applications 250. For example, the electronic device 101 may determine at least a portion of a display on which the screen is to be displayed, based on a state of the electronic device 101 identified by the sensor 230. The state of the electronic device 101 identified by the sensor 230 may be divided by a shape, state, and/or position of a deformable housing (e.g., the multi-foldable housing of FIG. 1). For example, the electronic device 101 including both the flexible display 150 and the cover display 152 may determine at least one display on which the screen is to be displayed from among the flexible display 150 and/or the cover display 152, based on the state of the electronic device 101 identified by the sensor 230. The electronic device 101 including the flexible display 150 may determine at least a portion on which the screen is to be displayed on the flexible display 150, based on the state of the electronic device 101 identified by the sensor 230.

In an embodiment, the processor 210 of the electronic device 101 may execute a plurality of software applications 250 substantially simultaneously, based on multitasking (or multi-window). The plurality of software applications 250 executed substantially simultaneously by the processor 210 may occupy different portions of the flexible display 150 and/or the cover display 152. For example, the processor 210 may display screens provided from the plurality of software applications 250 executed by the processor 210 on each of the portions of the flexible display 150.

According to an embodiment, the processor 210 of the electronic device 101 may identify a motion of temporarily bending the flexible display 150. The motion may include a motion of bending the flexible display 150 longer than a preset period. For example, by the motion, an angle (e.g., the first angle 141 and/or the second angle 142 of FIG. 1) between housings (e.g., the first housing 111, the second housing 112, and/or the third housing 113) of the electronic device 101 may be increased or decreased from a preset angle of about 180 ° to another angle exceeding a threshold angle. The motion may include a first gesture to rotate at least one of the housings so that a difference between the angle between the housings and the preset angle is changed by exceeding the threshold angle. The motion may include a second gesture to rotate at least one of the housings so that the angle between the housings is changed to the preset angle after the first gesture. The first gesture and the second gesture may be performed at a time difference exceeding a preset time difference (e.g., about 1.5 seconds and/or about 3 seconds). However, the present disclosure is not limited to a particular time difference and other time differences may also be used.

In an embodiment, when a difference between the angle between the housings and the preset angle (e.g., 180 °) exceeds the threshold angle during a period exceeding the preset period by the first gesture, the processor 210 may display a second screen associated with the first screen that was displayed on the flexible display 150 before identifying the first gesture. For example, the processor 210 may display the second screen on the flexible display 150 and/or the cover display 152 while maintaining the first screen on the flexible display 150. Maintaining the first screen on the flexible display 150 may include that the first screen is displayed in a smaller size.

In an embodiment, the second screen displayed together with the first screen based on multitasking may correspond to a software application selected (or specified) by the user of the electronic device 101. For example, the electronic device 101 may receive a user input for mapping at least one software application to various conditions from a user. Based on the user input, the electronic device 101 may identify a software application to provide the second screen. The embodiment is not limited thereto, and the second screen may be a software application matched (or paired, or linked) with the first screen. For example, matching between the first screen and the second screen may be based on instructions of a software application corresponding to the first screen. Such instructions may be pre-defined. For example, the matching between the first screen and the second screen may be registered by a user input (e.g., a user input based on a visual object such as an application tray).

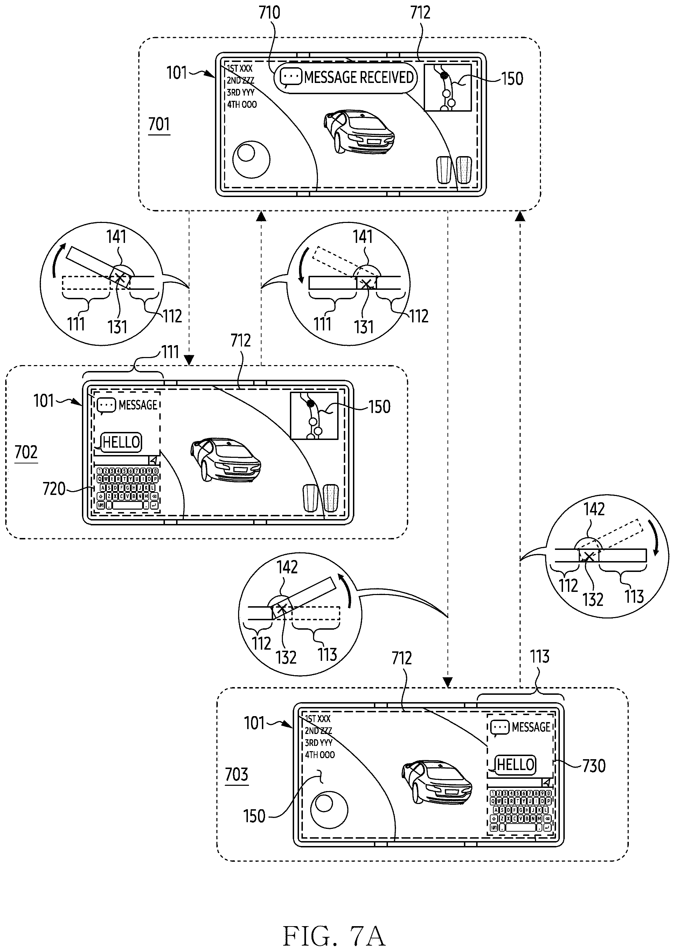

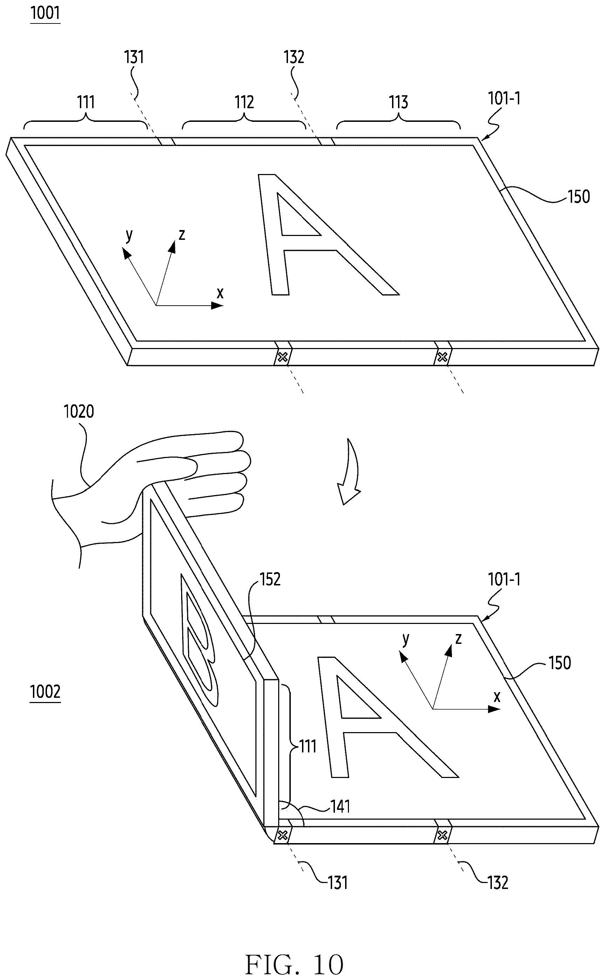

In an embodiment, after a preset period from a timing at which the first gesture is identified, the processor 210 may display the second screen superimposed on at least a portion of the first screen displayed on the flexible display 150. For example, the electronic device 101 may provide a user interface (UI) such as the second screen floating (or hovering) on the first screen. An operation of the processor 210 displaying both the first screen and the second screen on the flexible display 150 will be described with reference to FIGS. 7A to 9B and/or 11. For example, the processor 210 may display the first screen on the flexible display 150 and the second screen on the cover display 152. The operation of the electronic device 101 displaying the first screen on the flexible display 150 and displaying the second screen on the cover display 152 will be described with reference to FIG. 10.

In an embodiment, the electronic device 101 that displays the first screen and the second screen on the flexible display 150 bent by the first gesture longer than the preset period may cease to display the second screen in response to identifying the second gesture, and may display the first screen on the flexible display 150. Since a display of the second screen is ceased in response to the second gesture, the processor 210 may provide a user experience of temporarily displaying the second screen associated with the first screen. Based on the user experience, the electronic device 101 may provide a user experience based on multitasking (or multi-window), based on the user's motion of temporarily bending the flexible display 150.

Hereinafter, an operation of the electronic device 101 for identifying the motion and/or the exterior of the electronic device 101 changed by the motion will be described with reference to FIGS. 3A, 3B, 3C, 4 and/or 5.

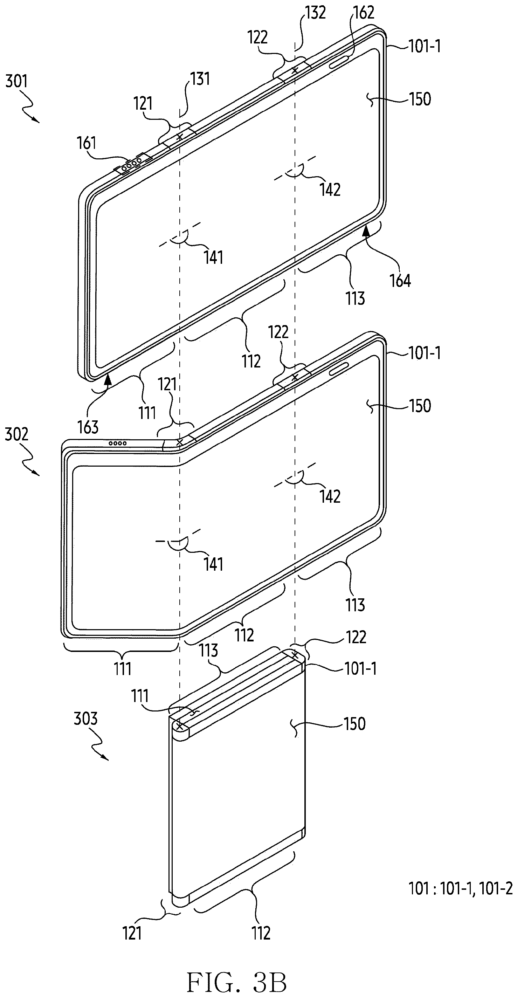

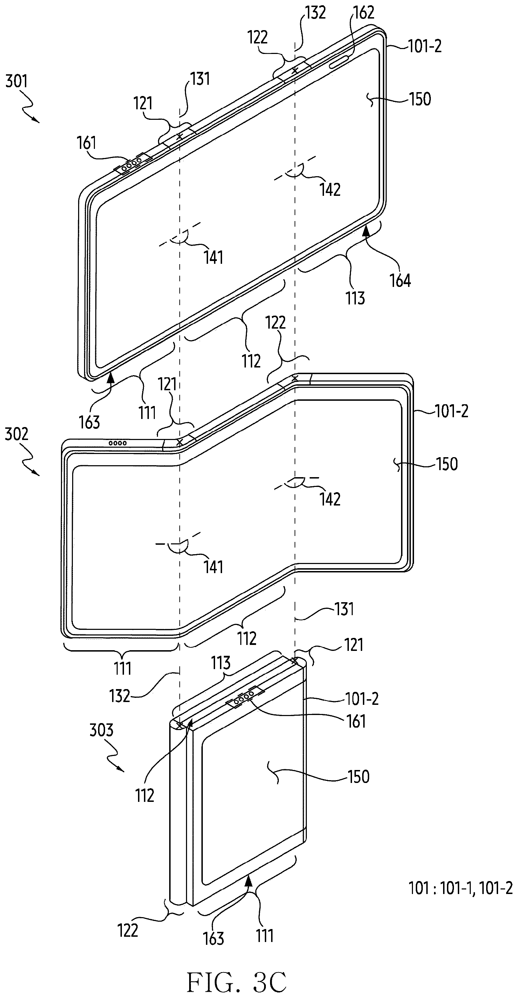

FIGS. 3A, 3B, and 3C illustrate an embodiment of a deformable electronic device 101. The electronic device 101 of FIGS. 1 and/or 2 may include an electronic device 101 of FIGS. 3A to 3C.

Referring to FIGS. 3A to 3C, according to an embodiment, the electronic device 101 may include a first speaker 161 and/or a third speaker 163 disposed in a first housing 111. The electronic device 101 may include a second speaker 162 and/or a fourth speaker 164 disposed in the third housing 113. The third speaker 163 may be disposed at a second periphery of the first housing 111 opposite to a first edge of the first housing 111 on which the first speaker 161 is disposed. The fourth speaker 164 may be disposed at a second periphery of the third housing 113 opposite to a first periphery of the third housing 113 on which the second speaker 162 is disposed. Although the second speaker 162 disposed on a surface of the third housing 113 on which a flexible display 150 is positioned, the first speaker 161, the third speaker 163, and the fourth speaker 164 disposed on a side surface connected to a front surface of the electronic device 101 are exemplarily illustrated, locations of speakers (e.g., the first speaker 161 to the fourth speaker 164) included in the electronic device 101 are not limited to locations illustrated in FIGS. 3A to 3C.

Referring to FIGS. 3A to 3C, different shapes of the electronic device 101 supporting deformability based on a plurality of folding axes (e.g., a first folding axis 131 and/or a second folding axis 132) are illustrated. Referring to FIG. 3A, a first electronic device 101-1 including a flexible display 150 that is fully visually covered by the first housing 111 to the third housing 113 folded along the first folding axis 131 and the second folding axis 132 is illustrated. Referring to FIG. 3A, different states 301, 302, and 303 of the first electronic device 101-1 distinguished by a first angle 141 and a second angle 142 are illustrated. A state 301 of the first electronic device 101-1 in which the first angle 141 and the second angle 142 are substantially a straight angle (e.g., about 180 °) may be referred to as a fully unfolded state, an opened state, a fully opened state, an unfolded state, a flat state, an outspread state and/or a planar state. Although FIGS. 3A to 3C show two folding axes only, the present disclosure is not limited thereto.

Referring to FIGS. 3A to 3C, in the state 301, the flexible display 150 positioned from the first housing 111 to the third housing 113 across over the second housing 112 may have a substantially flat shape. In the state 301, a single plane may be formed on the front surface of the electronic device 101 on which the flexible display 150 is positioned. In the state 301, directions of front surfaces of the first housing 111, the second housing 112, and the third housing 113 may be parallel and/or the same to each other. The state 191 of FIG. 1 may correspond to or be included in the state 301 and/or the unfolded state of FIG. 3A.

Referring to FIG. 3A, a state 302 of the first electronic device 101-1 in which the first angle 141 is a substantially straight angle and the second angle 142 is an angle less than the straight angle is illustrated. A state of the first electronic device 101-1 in which the first angle 141 and/or the second angle 142 is less than the straight angle, including the state 302, may be referred to as a semi-folded (or semi-folding) state, an in-folded state, a sub-unfolded state (or a sub-folded state), an intermediate state, and/or a concave state. Although only a second hinge assembly 122 of a first hinge assembly 121 and the second hinge assembly 122 is illustrated to be folded, the embodiment is not limited thereto, and the sub-folded state may include a state in which both the first angle 141 and the second angle 142 are less than the straight angle and exceed 0 °. In the sub-folded state, a plurality of planes may be formed by the flexible display 150 folded by at least one hinge assembly. Referring to the state 302, the flexible display 150 bent by the second hinge assembly 122 may include two flat portions distinguished by the second hinge assembly 122. For example, the flat portions of the flexible display 150 distinguished by the second hinge assembly 122 may face different directions that are not parallel. The states 192 and 193 of FIG. 1 may correspond to or be included in the state 302 and/or the sub-folded state of FIG. 3A.

The sub-folded state of the first electronic device 101-1 is not limited to the state 302 of FIG. 3A in which the first angle 141 and/or the second angle 142 is folded to less than the straight angle. Referring to FIG. 3B, the state 302 of the first electronic device 101-1 included in the sub-folded state is illustrated. In the state 302 of FIG. 3B, the first angle 141 and/or the second angle 142 of the first electronic device 101-1 may be bent at an angle exceeding the straight angle. The state 302 may be referred to as an out-folded state, a sub-folded state, an intermediate state, and/or a convex state of the first electronic device 101-1. Referring to FIG. 3B, the exemplary state 302 in which the first angle 141 is bent to exceed the straight angle is illustrated. As both the first angle 141 and the second angle 142 are folded to substantially 360 °, the first electronic device 101-1 may switch to the state 303 of FIGS. 3A to 3B from the state 302. As both the first angle 141 and the second angle 142 are unfolded to substantially 180 °, the first electronic device 101-1 may switch to the state 301 of FIGS. 3A to 3B from the state 302 of FIG. 3B.

Referring to FIG. 3A, a state 303 of the first electronic device 101-1 in which both the first angle 141 and the second angle 142 are substantially 0 ° may be referred to as a fully folded state, a folded state, a closed state, and/or a fully closed state. In the state 303, the flexible display 150 may be fully visually covered by the first housing 111 to the third housing 113. For example, in the folded state, a size where the flexible display 150 of the first electronic device 101-1 is exposed to the outside may be substantially zero. Referring to FIG. 3A, the exemplary state 303 in which each of a front surface and a rear surface of the third housing 113 where a portion of the flexible display 150 is positioned is covered by the first housing 111 and the second housing 112 is illustrated, but the embodiment is not limited thereto.

The first electronic device 101-1 including the flexible display 150 fully visually covered in the folded state may include a cover display 152 disposed on the rear surface that is opposite to the front surface where the flexible display 150 is positioned. Referring to FIG. 3A, according to an embodiment, the first electronic device 101-1 may include the cover display 152 disposed on the second surface (e.g., the rear surface of the first housing 111) of the first housing 111 that is opposite to the first surface (e.g., the front surface of the first housing 111) on which a portion of the flexible display 150 is positioned. The embodiment is not limited thereto, and the cover display 152 may be positioned on the rear surface of the second housing 112 that is opposite to the front surface of the second housing 112 where a portion of the flexible display 150 is positioned. However, it may be foreseen that a cover display 152 is positioned on the rear surface of the first housing 111 and on the rear surface of the second housing 112.

Referring to FIG. 3A, the first electronic device 101-1 including the flexible display 150 configured to be folded at an angle less than or equal to the straight angle along the first axis 131 and the second folding axis 132 may be referred to as a G-shaped foldable electronic device. Referring to FIG. 3C, different shapes of a second electronic device 101-2 including the flexible display 150 configured to be folded at an angle greater than the straight angle along at least one of the first folding axis 131 or the second folding axis 132 are illustrated. The second electronic device 101-2 may be referred to as an S-shaped foldable electronic (or Z-shaped foldable electronic).

Referring to FIG. 3C, different states 301, 302, and 303 of the second electronic device 101-2 distinguished by the first angle 141 and the second angle 142 are illustrated. In a state 301 corresponding to the unfolded state, a flat plane may be formed by the flexible display 150.

Referring to FIG. 3C, a state 302 in which the second electronic device 101-2 is folded to the first angle 141 greater than the straight angle and the second angle 142 less than the straight angle is illustrated. A state of the second electronic device 101-2 in which the first angle 141 and/or the second angle 142 is changed to an angle different from the straight angle may be referred to as a semi-folded (or semi-folding) state, an out-folded state, an intermediate state, a sub-folded state, and/or a convex state. Although only the first angle 141 among the first angle 141 and the second angle 142 is illustrated as exceeding the straight angle, the embodiment is not limited thereto. In a convex state including the state 302, a plurality of planes formed by the flexible display 150 folded by the first hinge assembly 121 may face different directions.

Referring to FIG. 3C, a state 303 of the second electronic device 101-2 in which the first angle 141 is substantially 360 ° and the second angle 142 is substantially 0 ° may be referred to as a fully folded state, a folded state, and/or a closed state. In the state 303, among portions of the flexible display 150 positioned on each of the first housing 111 to the third housing 113, only a portion of the flexible display 150 positioned on the first housing 111 may be exposed to the outside.

According to an embodiment, the electronic device 101 may identify a state of the electronic device 101 (e.g., any one of the unfolded state, the folded state, the in-folded state, and/or the out-folded state) indicated by the first angle 141 and the second angle 142, based on a sensor (e.g., the sensor 230 of FIG. 2). Based on switching between states described with reference to FIGS. 3A to 3C, the electronic device 101 may display one or more screens based on multitasking on the flexible display 150 and/or the cover display 152.

For example, the electronic device 101 may display a second screen associated with a first screen, which was displayed on the flexible display 150 in the state 301, on the flexible display 150 and/or the cover display 152, after a preset period from a timing of switching from the state 301 in FIG. 3A to the state 302 where the third housing 113 is bent with respect to the second housing 112. For example, in the state 302 of displaying the second screen, the electronic device 101 may display the first screen on at least a portion of the flexible display 150. In an embodiment, a location where the electronic device 101 displays the second screen may be associated with a shape of the flexible display 150 bent (or folded) in the state 302.

Hereinafter, an exemplary operation of the electronic device 101 displaying the second screen associated with the first screen will be described with reference to FIG. 4.

FIG. 4 illustrates a flowchart of an electronic device, according to an embodiment. The electronic device 101 of FIGS. 1 to 2 and/or the processor 210 of FIG. 2 may perform an operation described with reference to FIG. 4.

Referring to FIG. 4, in operation 410, according to an embodiment, a processor of an electronic device may display a first screen on a flexible display (e.g., the flexible display 150 of FIGS. 1 and 2) based on the unfolded state. For example, in the unfolded state checked by a plurality of sensors (e.g., the sensor 230 of FIG. 2) of the electronic device, the processor may display the first screen having a size of the entire displaying region of the flexible display on the flexible display. In an embodiment that the electronic device includes the first housing 111, the second housing 112, and the third housing 113 of FIG. 1, the plurality of sensors may include a first sensor for detecting rotation of the first housing 111 with respect to the second housing 112 and a second sensor for detecting rotation of the third housing 113 with respect to the second housing 112. As described above with reference to FIG. 2, the first sensor and/or the second sensor may include an IMU sensor, a 6-DoF sensor, and/or a hall sensor. The unfolded state of operation 410 may include the state 191 of FIG. 1, the state 301 of FIG. 3A, and/or the state 301 of FIG. 3C.

Referring to FIG. 4, in operation 420, according to an embodiment, the processor of the electronic device may identify or check an angle between housings (e.g., the first housing 111, the second housing 112, and/or the third housing 113 of FIG. 1) in which portions of the flexible display are positioned. The angles of operation 420 may include the first angle 141 and/or the second angle 142 of FIGS. 1, 3A to 3C. The processor may identify an angle of operation 420 based on sensor data obtained from at least one of the plurality of sensors. Although an operation of the processor directly identifying the angle based on the sensor data has been described, the embodiment is not limited thereto, and the processor may obtain sensor data dependent on the angle, and/or may compute or measure a numeric value.

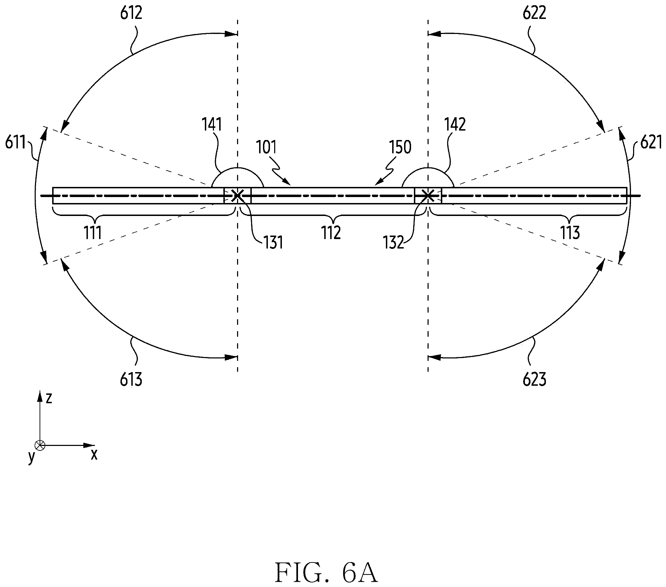

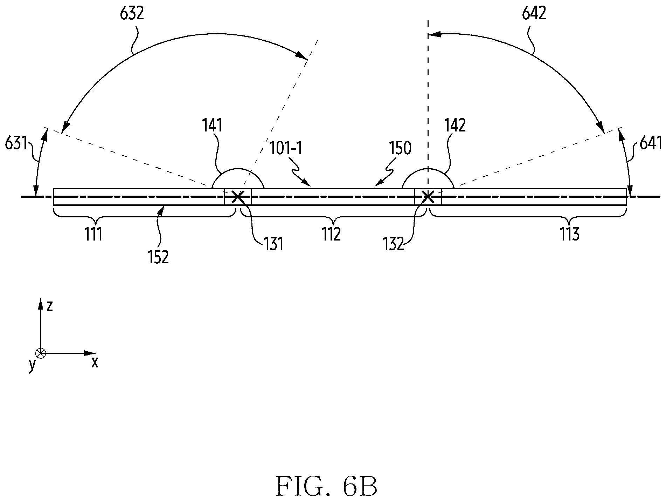

Referring to FIG. 4, in operation 430, according to an embodiment, the processor of the electronic device may determine whether the angle of operation 420 is included within a second angle range different from a first angle range for the unfolded state. The first angle range may be set to include a straight angle including 180 ° in order to distinguish the unfolded state and other states. The second angle range may be associated with the sub-folded state. An example of the first angle range and/or the second angle range of operation 430 will be described with reference to FIGS. 6A and/or 6B. When the angle of operation 420 is included in the second angle range (430-YES), the processor may perform operation 440. When the angle of operation 420 is included in the first angle range, and/or not included in the second angle range (430-NO), the processor may track or monitor an angle between housings based on operation 420.

Referring to FIG. 4, in operation 440, according to an embodiment, the processor of the electronic device may display the first screen of operation 410 and the second screen associated with the first screen, based on whether an angle included in the second angle range is maintained longer than a preset period. For example, when the angle identified based on operation 420 exceeds the preset period and is maintained within the second angle range, the processor may display the second screen by performing operation 440. Since the angle of operation 420 is included in the second angle range associated with the sub-folded state, the flexible display of the electronic device may have at least a partially bent (or folded) shape while the processor performs operation 440. The processor may display the first screen and the second screen on each of flat portions of the flexible display distinguished by a bent portion of the flexible display. The embodiment is not limited thereto, and the processor may display the first screen on the flexible display, and display the second screen on a cover display (e.g., the cover display 152 of FIG. 2 and/or FIG. 3A). Further, the second screen may be displayed as floating on the first screen.

According to an embodiment, the processor displaying the first screen and the second screen based on operation 440 may be additionally or alternatively performed according to whether a grip on the electronic device is detected based on a grip sensor. For example, the processor detecting the grip on the electronic device may perform operation 440. When the grip on the electronic device is not detected, the processor may not perform operation 440 or may refrain from performing operation 440. For example, when the angle between the housings is changed by an unintended event such as a drop, based on operation 430, the processor identifying the angle included in the second angle range may check that the grip is not detected by using a grip sensor. When the grip is not detected, the processor may refrain from or cease performing operation 440 even though the angle included in the second angle range is identified.

A location of the second screen displayed based on operation 440 may be associated with a shape of the flexible display folded by the angle of operation 420. While displaying the first screen in the unfolded state, the processor of the electronic device that identifies the second housing and the third housing folded longer than the preset period may display the second screen associated with the first screen on a portion of the flexible display positioned on the third housing, and display the first screen on another portion of the flexible display positioned on the first housing and the second housing. While displaying the first screen in the unfolded state, the processor of the electronic device that identifies the first housing and the second housing folded longer than the preset period may display the second screen on a portion of the flexible display positioned on the first housing, and display the first screen on another portion of the flexible display positioned on the second housing and the third housing.

In an embodiment, after displaying the first screen and the second screen based on operation 440, the processor may determine whether the state of the electronic device is restored to the unfolded state. While displaying the first screen and the second screen based on the second housing and the third housing folded longer than the preset period, whether the second housing and the third housing are to be changed to a position associated with the unfolded state may be determined, detected, checked, or identified.

For example, in the state of displaying the second screen based on operation 440, in response to the housings of the electronic device changed to the position associated with the unfolded state, the processor may display the first screen in the entire displaying region of the flexible display, and at least temporarily cease to display the second screen.

In an embodiment, the second screen displayed in operation 440 may be associated with the first screen. For example, while displaying the first screen including a visual object associated with a notification message, the processor may display the second screen associated with the notification message on the portion of the flexible display positioned on the third housing, based on the second housing and the third housing folded longer than the preset period. The second screen may be associated with a button and/or a link displayed for switching to another screen in the first screen, such as the visual object 170 of FIG. 1. When a plurality of second screens are associated with the first screen, the processor may simultaneously display the plurality of second screens based on a layout based on a multi-window. The embodiment is not limited thereto, and the processor may selectively display any one of the plurality of second screens by using priority allocated to each of the plurality of second screens. Alternatively, the processor may display the plurality of second screens successively.

In an embodiment, the second screen displayed in operation 440 may be a screen set to be paired with the first screen by a user of the electronic device. For example, before pairing the first screen and the second screen, the processor of the electronic device may provide an application tray (or an application list) together with the first screen. The processor may execute a software application specified by a user input associated with the application tray, in order to display the second screen. The processor may receive a user input indicating whether to maintain pairing of the first screen and the second screen. After receiving the user input, the processor may display the second screen specified by the user input and the first screen, based on operation 440 of FIG. 4. The processor may display a visual object for disassociating (or unlinking) pairing of the first screen and the second screen while displaying the second screen based on operation 440.

FIG. 5 illustrates an exemplary flowchart for describing an operation of an electronic device based on a program, according to an embodiment. The electronic device 101 of FIGS. 1 and 2 and/or the processor 210 of FIG. 2 may perform an operation described with reference to FIG. 5. For example, the electronic device 101 and/or the processor 210 of FIG. 2 may perform the operations described with reference to FIG. 5. Referring to FIG. 5, an operation of an electronic device 101 that is divided based on a process (e.g., thread and/or instance), which is a unit of a task executed by a processor of the electronic device, is described. For example, a software application 510, a framework 260, and a sensor driver 270 illustrated as different blocks may correspond to each of processes executed by the processor. Based on multitasking (or multithreading), the processor of the electronic device may substantially simultaneously execute instructions of each of the processes of FIG. 5.

Referring to FIG. 5, in operation 520, according to an embodiment, the processor of the electronic device may display a first screen provided from the software application 510. The processor may perform operation 520 of FIG. 5 similar to operation 410 of FIG. 4. Based on operation 520, the processor may display the first screen on a flexible display (e.g., the flexible display 150 of FIG. 1 and/or FIG. 2) of the electronic device. Operation 520 may be performed in the unfolded state. The software application 510 of FIG. 5 may be included in the software applications 250 of FIG. 2.

Referring to FIG. 5, in operation 530, according to an embodiment, the processor of the electronic device may obtain position information indicating position of the electronic device by controlling the sensor driver 270 based on execution of the framework 260. For example, the position information may include sensor data of a sensor (e.g., the sensor 230 of FIG. 2) of the electronic device including an IMU, a 6-DoF sensor, and/or a hall sensor. Based on the position information, the processor may identify a current state and/or current shape of the electronic device among preset states (e.g., an unfolded state, a sub-folded state, and/or a folded state). For example, the preset states may be distinguished by an angle (e.g., the first angle 141 and/or the second angle 142 of FIGS. 1, 3A to 3C) between housings, as described above with reference to FIGS. 3A to 3C. It may also be foreseen that a preset state is also defined by a combination of a plurality of angles (e.g., the first angle 141 and the second angle 142).

In an embodiment, the processor obtaining the position information based on the operation 520 may be performed while displaying the first screen of the operation 520 on the flexible display (e.g., the flexible display 150 of FIGS. 1, 2, 3A to 3C) based on execution of the software application 510. For example, when angles (e.g., the first angle 141 of FIGS. 1 and 3A to 3C and/or the second angle 142 of FIGS. 1 and 3A to 3C) between the housings are maintained within an angle range distinguished from the unfolded state longer than a preset period, the processor may perform operation 540.

Referring to FIG. 5, in operation 540, according to an embodiment, the processor of the electronic device may identify or detect occurrence of a folding event based on the position information. The processor identifying the occurrence of the folding event may notify the occurrence of the folding event to the software application 510, based on execution of the framework 260. The folding event of operation 540 may be identified by an input indicating a display of a second screen associated with the first screen displayed on the flexible display based on rotation of the housings. For example, when an angle between housings is maintained within another angle during a preset period after changing from a preset angle of the unfolded state to the other angle, the processor may identify the input. The input may be identified, based on whether a first gesture of rotating the housings has been received so that a difference between an angle between the housings, which is identified by the position information, and the preset angle, is changed by exceeding a threshold angle, and whether an angle between the housings, which is changed by the first gesture, is maintained longer than the preset period.

In an embodiment, that the processor notifies the folding event to the software application 510 may include an operation of executing a sub-routine (e.g., event listener) indicated by instructions included in the software application 510. For example, the processor may execute the sub-routine based on an identifier (or preset constant) corresponding to the folding event. The sub-routine executed by the processor may be executed by a process corresponding to the software application 510, as in operation 550 of FIG. 5. The sub-routine may be pre-registered with the framework 260 based on an application programming interface (API) provided by the framework 260 in order to process a shuttle event and/or another event identified by the framework 260. A system process (e.g., event dispatcher and/or event handler) included in the framework 260 may cause the processor of the electronic device to execute the sub-routine of the software application 510 based on identification of the folding event.

Referring to operation 550 of FIG. 5, the processor of the electronic device may check the second screen to be displayed based on the folding event, based on execution of the software application 510. Operation 550 may be performed based on execution of a sub-routine (or one or more instructions included in the sub-routine) corresponding to the folding event. The processor checking the second screen based on operation 550 may execute an API provided by the framework 260 and for requesting display of the second screen (e.g., operation 560 of FIG. 5). For example, in operation 560, the processor may call (or invoke) an API for requesting the display of the second screen to the framework 260. Based on the execution of the API, the processor may initiate an operation for displaying the second screen together with the first screen displayed based on the software application 510.

Referring to FIG. 5, in operation 570, according to an embodiment, the processor of the electronic device may display the second screen on a flexible display and/or a cover display (e.g., the cover display 152 of FIG. 1 to FIG. 2 and/or FIG. 3A) together with the first screen. For example, in an embodiment including only the flexible display, the processor may display the first screen and the second screen on each of flat portions of the flexible display. For example, in an embodiment including both the flexible display and the cover display, the processor may maintain displaying the first screen on the flexible display and display the second screen on the cover display.

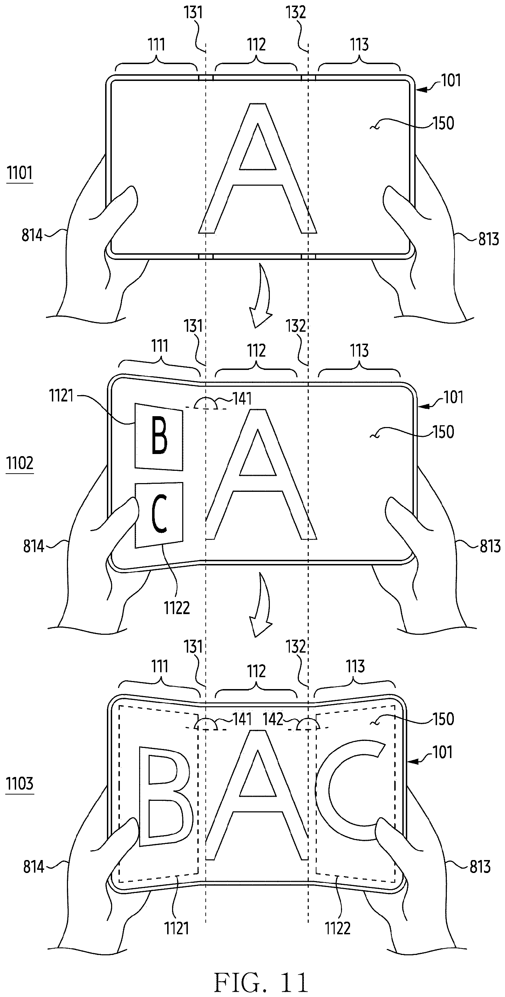

Although an operation of the processor requesting display of a single second screen is exemplarily described, the embodiment is not limited thereto. An embodiment in which the processor displays a plurality of second screens in response to the folding event will be described with reference to FIG. 11. Such plurality of second screens may be shown floating on the first screen or may be shown on a corresponding plurality of cover displays.

Hereinafter, position, angle, and/or shape of an electronic device causing occurrence of the folding event of FIG. 5 will be exemplarily described with reference to FIGS. 6A and/or 6B.

FIGS. 6A and 6B illustrate an example of an operation of an electronic device 101 for obtaining information associated with an angle between housings. The electronic device 101 of FIG. 1 and/or FIG. 2 may include the electronic device 101 of FIG. 6A and/or a first electronic device 101-1 of FIG. 6B. An operation of the electronic device 101 described with reference to FIGS. 6A and/or 6B may be associated with the operations 420, 430, and 440 of FIG. 4 and/or the operations 520 and 530 of FIG. 5.

Referring to FIG. 6A, an exemplary exterior of the electronic device 101 in the unfolded state viewed from a y-axis (or -y-axis) is illustrated. The electronic device 101 may identify a first angle 141 between a first housing 111 and a second housing 112 by using one or more sensors (e.g., the sensor 230 of FIG. 2). The electronic device 101 may identify a second angle 142 between the second housing 112 and a third housing 113 by using the one or more sensors. While both the first angle 141 and the second angle 142 maintain a preset angle (about 180 °) corresponding to the unfolded state, a state of the electronic device 101 may be maintained in the unfolded state.

In an embodiment, in the unfolded state, the electronic device 101 may monitor changes in the state and/or shape of the electronic device 101 based on the first angle 141 and/or the second angle 142. For example, a user of the electronic device 101 may rotate the first housing 111 with respect to the second housing 112 or may rotate the third housing 113 with respect to the second housing 112. When the user rotates the first housing 111 with respect to the second housing 112, the electronic device 101 may identify a change in the first angle 141 by using a sensor. Referring to FIG. 6A, an angle range 611 may be formed based on the preset angle corresponding to the unfolded state. For example, the angle range 611 may be formed within a range of about ± 30 ° (e.g., 150 ° to 210 °) based on 180 °. The angle range 611 may correspond to the first angle range of operation 430 of FIG. 4. However, a range of about ± 30 ° is only an example and other ranges may be likewise used (e.g., ± 20 °, ± 25 °, ± 35 °, ± 40 °, etc.).

In an embodiment, the electronic device 101 may identify that the first angle 141 is changed by exceeding the angle range 611, by using the sensor for identifying the rotation of the first housing 111 with respect to the second housing 112. The electronic device 101 identifying the first angle 141 changed by exceeding the angle range 611 may check switching from the unfolded state to another state.

In the unfolded state, as the first housing 111 rotates with respect to the second housing 112, the first angle 141 may be included in any one of angle ranges 612 and 613 different from the angle range 611. For example, the angle range 612 may be formed between 90 ° and 150 °. For example, the angle range 613 may be formed between 210 ° and 270 °. When the first angle 141 is included in any one of the angle ranges 612 and 613 by exceeding the preset period, the processor may identify occurrence of the folding event of FIG. 5. The electronic device 101 identifying the occurrence of a folding event based on the change in the first angle 141 may display a preset second screen on a portion of the flexible display 150 positioned on the first housing 111, together with the first screen being displayed on the flexible display 150. For example, in a sub-folded state switched based on the change in the first angle 141, the electronic device 101 may display the second screen, superimposed on the first screen displayed on the flexible display 150.

Similar to the above-described operation based on the first angle 141, the electronic device 101 may identify a change in the second angle 142. For example, when the user rotates the third housing 113 with respect to the second housing 112, the electronic device 101 may identify the change in the second angle 142 by using a sensor. Referring to FIG. 6A, an angle range compared to the second angle 142 may include at least one of an angle range 621 formed based on the preset angle corresponding to the unfolded state and angle ranges 622 and 623, which are different from the angle range 621. For example, the angle range 621 may be formed between about 150 ° and 210 °. The angle range 622 may be formed between about 90 ° and 150 °. The angle range 623 may be formed between about 210 ° and 270 °. In the unfolded state, when the second angle 142 substantially corresponding to 180 ° is changed from the 180 ° to any of the angle ranges 622 and 623 by exceeding the preset period, the electronic device 101 may identify the occurrence of the folding event of FIG. 5.

Referring to FIG. 6B, an exemplary exterior of the first electronic device 101-1 in the unfolded state viewed from y-axis (or -y-axis) is illustrated. The first electronic device 101-1 including the flexible display 150 and the cover display 152 may check or identify the first angle 141 and/or the second angle 142 by using one or more sensors. While each of the first angle 141 and the second angle 142 is included in angle ranges 631 and 641 associated with the unfolded state, a state of the first electronic device 101-1 may be maintained in the unfolded state. For example, the angle range 631 compared to the first angle 141 and for determining the unfolded state may be formed between about 150 ° and 180 °. The embodiment is not limited thereto, and the angle range 631 may be formed between about 135 ° and 180 °. For example, the angle range 641 for determining the unfolded state may also be formed within a range of about 150 ° to 180 °, or in a range of about 135 ° to 180 °. These values are only exemplary and not limiting for the present disclosure in any way.

In an embodiment, in the unfolded state, the first electronic device 101-1 may determine or identify a state of the first electronic device 101-1 switched from the unfolded state to another state, based on whether the first angle 141 and/or the second angle 142 is changed to an angle within an angle range (e.g., angle ranges 632 and 642) different from the angle ranges 631 and 641. For example, as the first housing 111 rotates with respect to the second housing 112, the first angle 141 may be changed to the angle range 632. The angle range 632 may be formed between about 45 ° and 135 °. The embodiment is not limited thereto, and the angle range 632 may be formed between about 30 ° and 135 °.

In an embodiment, when the first angle 141 is maintained within the angle range 632 by exceeding the preset period after switching from the angle range 631 to the angle range 632, the first electronic device 101-1 may identify or check the occurrence of the folding event of FIG. 5. For example, the first electronic device 101-1 identifying the folding event based on the first angle 141 may display a second screen associated with a first screen displayed on the flexible display 150, on a portion of the flexible display 150 positioned on the first housing 111. For example, the first electronic device 101-1 including the cover display 152 may display the second screen on the cover display 152 together with the first screen displayed on the flexible display 150.

For example, the first electronic device 101-1 may identify or check the second angle 142 changed by the rotation of the third housing 113 with respect to the second housing 112. For example, as the third housing 113 rotates with respect to the second housing 112, the second angle 142 may be changed to the angle range 642. The angle range 642 may be formed between about 45 ° and 135 °, or may be formed between about 30 ° and 135 °. When the second angle 142 is changed from the angle range 641 to the angle range 642 and then maintained within the angle range 642 by exceeding the preset period, the first electronic device 101-1 may identify or check the occurrence of the folding event of FIG. 5. The first electronic device 101-1 identifying the folding event based on the second angle 142 may display a second screen associated with the first screen being displayed on the flexible display 150, on a portion of the flexible display 150 positioned on the third housing 113.

In an embodiment, the first electronic device 101-1 identifying a folding event based on the second angle 142 between the second housing 112 and the third housing 113 different from the first housing 111 at which the cover display 152 is positioned may display the first screen and the second screen together on the flexible display 150. The embodiment is not limited thereto, and the first electronic device 101-1 may display the first screen on the flexible display 150 and display the second screen on the cover display 152.

Hereinafter, a shuttle gesture (or shuttle control gesture or folding gesture) may include a gesture and/or motion, which changes the first angle 141 and/or the second angle 142 having a preset angle (about 180 °) corresponding to the unfolded state and/or angle range (e.g., angle ranges 611, 621, 631, and 641) to another angle range (e.g., angle ranges 612, 613, 622, 623, 632, and 642), and then maintains within to other angle range during a period exceeding a preset period (e.g., 1.5 to 3 seconds). According to an embodiment, the electronic device 101 may display the second screen associated with the first screen displayed on the flexible display 150, on the flexible display 150 and/or the cover display 152, in response to the shuttle gesture. When switching from the sub-folded state based on the shuttle gesture to the unfolded state, the electronic device 101 displaying the second screen based on the shuttle gesture may cease to display the second screen, and display the first screen in the entire displaying region of the flexible display 150. Therein, displaying the second screen may be ceased only temporarily.

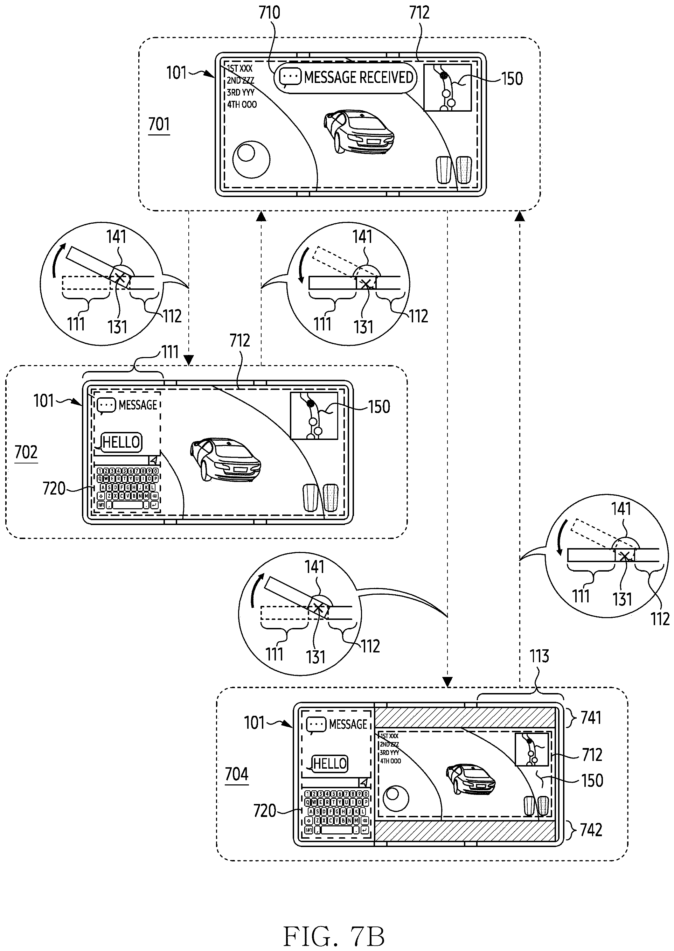

Hereinafter, an exemplary operation of the electronic device 101 identifying a shuttle gesture causing rotation of the first folding axis 131 and/or the second folding axis 132 will be described with reference to FIGS. 7A and/or 7B.

FIGS. 7A and 7B exemplarily illustrate states 701, 702, 703, and 704 of an electronic device 101 switched based on rotation between housings. The electronic device 101 of FIGS. 1 and 2 and/or the processor 210 of FIG. 2 may perform an operation of the electronic device 101 described with reference to FIGS. 7A and/or 7B. The operation of the electronic device 101 described with reference to FIG. 7A and/or FIG. 7B may be associated with at least one of the operations of FIG. 4.

Referring to FIG. 7A and/or FIG. 7B, different states 701, 702, 703, and 704 of the electronic device 101 distinguished by rotation of a multi-foldable housing are illustrated. In a state 701 corresponding to the unfolded state, the electronic device 101 may display a first screen 712 provided from a software application (e.g., a game application) on the entire displaying region (or entire active region) of the flexible display 150. In the state 701, the electronic device 101 may detect or identify rotation (e.g., rotation based on a first folding axis 131 and/or a second folding axis 132) of the multi-foldable housing.

For example, while identifying a second housing 112 and a third housing 113 maintaining position associated with the unfolded state, the electronic device 101 identifying a first housing 111 and a second housing 112 folded longer than a preset period may switch from the state 701 to a state 702. For example, the electronic device 101 identifying the first housing 111 folded with respect to the second housing 112 based on the shuttle gesture may switch from the state 701 to the state 702. In the state 702, the electronic device 101 may display a second screen 720 associated with a first screen 712 on a portion (or displaying region) of the flexible display 150 positioned on the first housing 111. In the state 702, the electronic device 101 may maintain displaying the first screen 712 on another portion (or displaying region) of the flexible display 150 positioned on the second housing 112 and the third housing 113.

Referring to the exemplary state 702 of FIG. 7A, the electronic device 101 may display the second screen 720, superimposed on the first screen 712 occupying the entire displaying region of the flexible display 150. In the state 702 switched from the state 701 displaying the first screen 712 including a visual object 710 associated with a notification message, the electronic device 101 may display the second screen 720 associated with the visual object 710 on the flexible display 150. For example, when the first housing 111 folded with respect to the second housing 112 by exceeding the preset period based on the shuttle gesture is detected, the electronic device 101 may execute a software application corresponding to the visual object 710. The electronic device 101 may display the second screen 720 provided from the executed software application on a portion of the flexible display 150 positioned on the first housing 111 folded by the shuttle event.

In an embodiment, the state 702 displaying the first screen 712 and the second screen 720 may be maintained based on whether a state of the electronic device 101 is changed to the unfolded state. For example, when a first angle 141 between the second housing 112 and the first housing 111 is changed to an angle range (e.g., the angle range 611 of FIG. 6A) corresponding to the unfolded state, or substantially changed to 180 °, the electronic device 101 may switch from the state 702 to the state 701. The electronic device 101 switched from the state 702 to the state 701 may cease to display the second screen 720 on the flexible display 150, and may display the first screen 712 on the entire displaying region of the flexible display 150.

For example, while identifying the first housing 111 and the second housing 112 that maintain a position associated with the unfolded state, the electronic device 101 identifying the second housing 112 and the third housing 113 folded longer than the preset period may switch from the state 701 to a state 703. For example, when a second angle 142 between the third housing 113 and the second housing 112 is included within a preset angle range (e.g., the angle ranges 622 and 623 of FIG. 6A) by exceeding the preset period based on the shuttle gesture, the electronic device 101 may switch from the state 701 to the state 703. In the state 703, the electronic device 101 may display a third screen 730 associated with the first screen 712 on a portion (or displaying region) of the flexible display 150 positioned on the third housing 113. In the state 703 switched from the state 701 displaying the first screen 712 including the visual object 710, similar to the second screen 720, the third screen 730 displayed by the electronic device 101 may be provided from a software application corresponding to the visual object 710.

In an embodiment, the state 703 of displaying the first screen 712 and the third screen 730 may be maintained until position (or posture) of the third housing 113 and the second housing 112 rotated based on the shuttle gesture is changed to position of the unfolded state. For example, when the second angle 142 between the third housing 113 and the second housing 112 is changed to an angle range (e.g., the angle range 621 of FIG. 6A) corresponding to the unfolded state, or substantially changed to 180 °, the electronic device 101 may switch from the state 703 to the state 701. The electronic device 101 switched from the state 703 to the state 701 may exclusively display the first screen 712, among the first screen 712 or the third screen 730, on the flexible display 150. Substantially changed to 180 ° may also include values of e.g. ±2 °.

Referring to FIG. 7A, the states 702 and 703 of displaying the second screen 720 and/or the third screen 730, superimposed on the first screen 712 occupying the entire displaying region of the flexible display 150 are illustrated. In the states 702 and 703, at least a portion of the first screen 712 may be covered or occluded by the second screen 720 and/or the third screen 730. The embodiment is not limited thereto. For example, the electronic device 101 may display the first screen 712 having a size reduced (or shrunk) based on a size of another portion different from the portion of the flexible display 150 on which the second screen 720 and/or the third screen 730 are displayed.

Referring to FIG. 7B, different states 702 and 703 in which the electronic device 101 identifying the first housing 111 folded with respect to the second housing 112 by exceeding the preset period is switched are illustrated. The first housing 111 may be rotated with respect to the second housing 112 based on the shuttle gesture. As described above with reference to FIG. 7A, the electronic device 101 may switch to the state 702 in which the second screen 720 is displayed, superimposed on the first screen 712, in response to a shuttle gesture for the first housing 111. The embodiment is not limited thereto, and as in the state 704, the electronic device 101 may display the second screen 720 on a portion of the flexible display 150 positioned on the first housing 111, and display the first screen 712 having a size reduced based on the size of the other portion on another portion of the flexible display 150, based on the first housing 111 and the second housing 112 folded longer than the preset period.

Referring to the exemplary state 704 of FIG. 7B, the electronic device 101 may display the first screen 712 reduced based on the size of the portion, on a portion of the flexible display 150 positioned on the second housing 112 and the third housing 113. A ratio (e.g., aspect ratio) between width and height of the first screen 712 displayed in the state 704 may correspond to a ratio (e.g., a ratio between width and height of the entire displaying region of the flexible display 150) between width and height of the first screen 712 displayed in the state 701 before the state 704. In the state 704, the electronic device 101 may display one or more letter boxes (e.g., letter boxes 741 and 742), together with the first screen 712. The one or more letter boxes may be referred to as margin (or padding). In the state 704, the electronic device 101 may reduce the first screen 712 in order to prevent or minimize the first screen 712 from being covered by the second screen 720.

In the state 704 in which the first screen 712 is reduced and displayed, when restored to the unfolded state, the electronic device 101 may at least temporarily cease to display the second screen 720, and display the first screen 712 having a reduced size on the entire displaying region of the flexible display 150. For example, the size of the first screen 712 may be expanded from a size smaller than a portion of the flexible display 150 positioned on the second housing 112 and the third housing 113 to a size of the entire displaying region of the flexible display 150.

As mentioned above, according to an embodiment, based on a shuttle gesture of bending (or folding) the flexible display 150 by exceeding the preset period, the electronic device 101 may display a second screen (e.g., the second screen 720 of FIGS. 7A and 7B and/or the third screen 730 of FIG. 7A) associated with information (e.g., the visual object 710) included in the first screen 712 displayed on the flexible display 150. For example, while displaying the first screen 712 associated with a game application, the electronic device 101 may display the second screen associated with a notification message (e.g., the visual object 710) included in the first screen 712, based on the shuttle gesture. The second screen may be displayed on a portion of the flexible display 150 distinguished by a folding axis (e.g., the first folding axis 131 and/or the second folding axis 132) of the flexible display 150 folded by the shuttle gesture, based on multitasking. For example, the second screen may be displayed together with the first screen 712.

In an embodiment, the electronic device 101 may display the second screen together with the first screen 712 to prevent the user experience based on the first screen 712 from being interrupted. While preventing interruption of the user experience based on the first screen 712, the electronic device 101 may support a user's instant action based on the second screen. For example, the electronic device 101 may identify or receive the user's action (e.g., a user's reply to a text message guided through the visual object 710) associated with the visual object 710 through the second screen based on a messenger application. The electronic device 101 performing a function (e.g., transmission of a text message) based on the action may cease to display the second screen, based on the user's motion unfolding (e.g., switching to the unfolded state) the flexible display 150. In the above-described case, the user of the electronic device 101 may continue to browse the first screen 712 while replying to the text message based on the second screen. For example, based on the shuttle gesture, the electronic device 101 may improve or enhance the user experience based on multitasking.

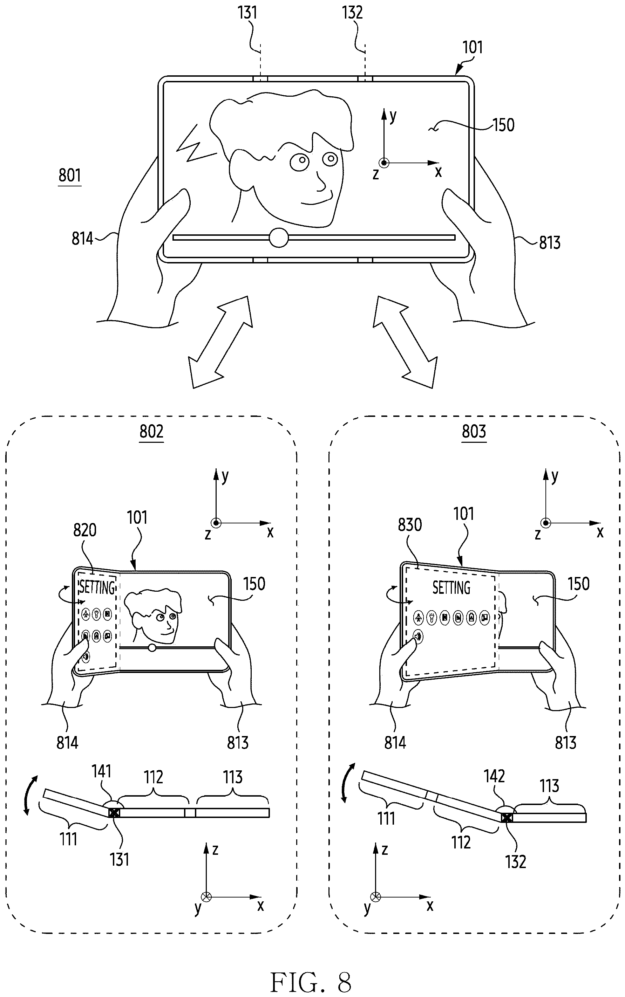

Hereinafter, an exemplary operation of the electronic device 101 associated with the deformation of the multi-foldable housing based on the shuttle gesture will be described with reference to FIG. 8.

FIG. 8 exemplarily illustrates states 801, 802, and 803 of an electronic device 101 switched based on rotation between housings (e.g., a first housing 111, a second housing 112, and/or a third housing 113). The electronic device 101 of FIGS. 1 and 2 and/or the processor 210 of FIG. 2 may perform an operation of the electronic device 101 described with reference to FIG. 8. The operation of the electronic device 101 described with reference to FIG. 8 may be associated with at least one of the operations of FIG. 4.

Referring to FIG. 8, different states 801, 802, and 803 of the electronic device 101 distinguished by a shuttle gesture are illustrated. In a state 801 corresponding to the unfolded state before the shuttle gesture is performed, the electronic device 101 may display a first screen on the entire displaying region of a flexible display 150. The embodiment is not limited thereto, and in the state 801, the electronic device 101 may display a plurality of screens based on multitasking and/or multi-window. The plurality of screens may be displayed on the flexible display 150, based on a picture-by-picture (PBP) layout and/or a picture-in-picture (PIP) layout.

According to an embodiment, the electronic device 101 may identify or detect the shuttle gesture performed based on a first folding axis 131 and/or a second folding axis 132, by using a sensor (e.g., the sensor 230 of FIG. 2). The shuttle gesture may be performed by a hand (e.g., a right hand 813 and/or a left hand 814) holding the electronic device 101. The electronic device 101 identifying the shuttle gesture based on the first folding axis 131 may display a plurality of screens based on multi-window on each of flat portions of the flexible display 150 distinguished by the first folding axis 131. For example, in the state 801, the electronic device 101 identifying the shuttle gesture associated with the first folding axis 131 may be switched to a state 802. The electronic device 101 identifying the shuttle gesture based on the second folding axis 132 may display a plurality of screens provided from a plurality of software applications executed based on multitasking on each of flat portions of the flexible display 150 distinguished by the second folding axis 132.

In the state 802 of FIG. 8, the electronic device 101 may display a plurality of screens on each of the flat portions of the flexible display 150 distinguished by the first folding axis 131. In the state 802, the flat portions of the flexible display 150 may include a portion of the flexible display 150 positioned on the first housing 111 adjacent to the first folding axis 131 and another portion of the flexible display 150 positioned on the second housing 112 and the third housing 113. In the state 802, the electronic device 101 may display a first screen that was displayed in the state 801 before the state 802, on a flat first portion of the flexible display 150 positioned on the second housing 112 and the third housing 113. In the state 802, the electronic device 101 may display a second screen 820 associated with the first screen on a flat second portion of the flexible display 150 positioned on the first housing 111. Although the present embodiment shows that the second screen 820 is displayed on a portion of the flexible display 150 positioned on the first housing 111 (as per state 802), the disclosure is not limited thereto and the second screen 820 may also be displayed on a portion of the flexible display 150 positioned on the third housing 113 in such state.

Referring to FIG. 8, the second screen 820 displayed on a display (e.g., the flexible display 150) of the electronic device 101 may correspond to a setting screen for adjusting setting values of the electronic device 101. Based on the second screen 820, the electronic device 101 may receive or identify a user input for adjusting a state of the flexible display 150 and/or the electronic device 101. In the second screen 820, the electronic device 101 may display visual objects (e.g., icon, button, image, video, text, or any combination thereof) corresponding to different states of the electronic device 101. For example, based on execution of a software application for browsing a video, in the state 801 of displaying the first screen for reproducing the video, the electronic device 101 may display a second screen 820 for controlling and/or adjusting states of the electronic device 101 together with the first screen, in response to the shuttle gesture.

In an embodiment, a location, direction, and/or size of the first screen displayed before the shuttle gesture and the second screen to be displayed together with the first screen after the shuttle gesture may be different, according to a distance in which each of the first housing 111 to the third housing 113 of the electronic device 101 is moved by the shuttle gesture. For example, the electronic device 101 may identify or compute a degree to which each of the first housing 111, second housing 112, and/or third housing 113 is moved or rotated (e.g., movement distance and/or rotation angle).

Referring to FIG. 8, a state 803 of the electronic device 101 identifying the shuttle gesture based on the second folding axis 132 is exemplarily illustrated. The electronic device 101 displaying the first screen in the state 801 corresponding to the unfolded state may identify the shuttle gesture based on the second folding axis 132. The electronic device 101 identifying the shuttle gesture may select or determine a location of the second screen associated with the first screen from among the flat portions of the flexible display 150 distinguished by the second folding axis 132, based on displacement of each portion of the electronic device 101 distinguished by the second folding axis 132. The displacement may include at least one of distances of each of portions of the electronic device 101, and a degree and/or angle of movement of the portions based on the shuttle gesture.

For example, the electronic device 101 may determine the location of the second screen by comparing a first distance where the third housing 113 moves by the shuttle gesture based on the second folding axis 132 with a second distance where the combination of the first housing 111 and the second housing 112 moves by the shuttle gesture. When the first distance is greater than the second distance, the electronic device 101 may display the second screen on a portion of the flexible display 150 positioned on the third housing 113. As in the state 803 of FIG. 8, when the second distance is greater than the first distance (e.g., when the combination of the first housing 111 and the second housing 112 is moved greater than the third housing 113 by the user's hand 814), the electronic device 101 may display the second screen 830 on a portion of the flexible display 150 positioned on the first housing 111 and the second housing 112. Although the present embodiment shows that the second screen 830 is displayed on a portion of the flexible display 150 positioned on the first housing 111 and the second housing 112 (as per state 803), the disclosure is not limited thereto and the second screen 830 may also be displayed on a portion of the flexible display 150 positioned on the second housing 112 and the third housing 113 in such state.

In at least one of the states 802 and 803 switched based on the shuttle gesture, the electronic device 101 may cease to display the second screen, based on whether the state is restored to the unfolded state. For example, in the state 802, when the first angle 141 is increased to about 180 °, the electronic device 101 may cease to display the second screen 820. For example, in the state 803, when the second angle 142 is increased to about 180 °, the electronic device 101 may remove the second screen 830 from the flexible display 150.

As described above, according to an embodiment, the electronic device 101 may determine locations at which each of a plurality of screens is to be displayed, by comparing distances at which each of portions of the electronic device 101 was moved by the shuttle gesture. Based on the determination of the locations, the electronic device 101 may measure the distances at which each of portions was moved, based on at least one of an IMU sensor, a hall sensor, and/or a 6-DoF sensor. According to the measured distance, as in the state 803, the electronic device 101 may adjust a size and/or location of the second screen 830 additionally displayed based on the shuttle gesture.

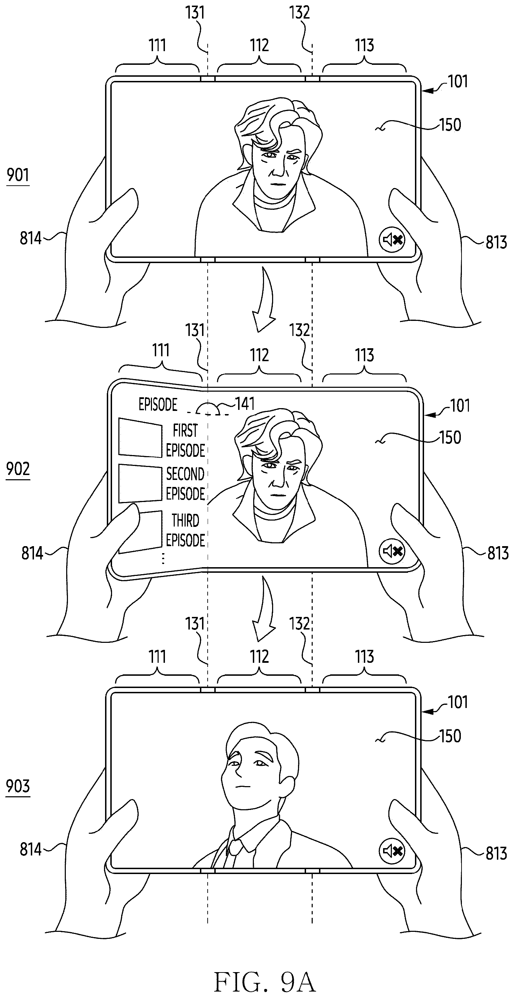

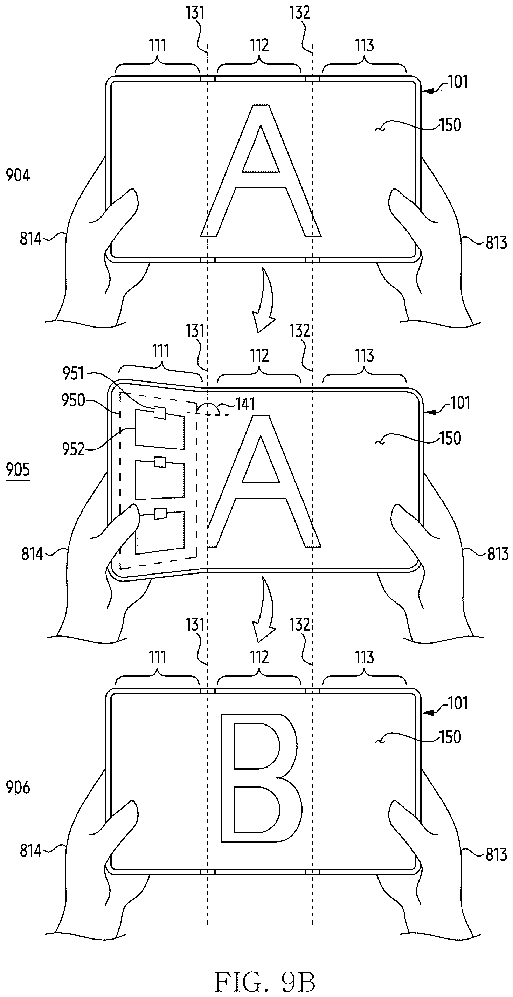

FIGS. 9A and 9B exemplarily illustrate states 901, 902, 903, 904, 905, and 906 of an electronic device 101 switched based on rotation between housings (e.g., a first housing 111, a second housing 112, and/or a third housing 113). The electronic device 101 of FIGS. 1 and 2 and/or the processor 210 of FIG. 2 may perform an operation of the electronic device 101 described with reference to FIGS. 9A and 9B. The operation of the electronic device 101 described with reference to FIG. 9A and/or FIG. 9B may be associated with at least one of the operations of FIG. 4.

Referring to FIG. 9A, different states 901, 902, and 903 of the electronic device 101 executing a software application for reproducing and/or streaming a video are illustrated. In the state 901 corresponding to the unfolded state, the electronic device 101 may display a first screen provided from the software application on the entire displaying region of a flexible display 150. In the state 901, the electronic device 101 may receive a shuttle gesture. For example, the electronic device 101 receiving the shuttle gesture with respect to a first folding axis 131 may switch from the state 901 to the state 902.

Referring to FIG. 9A, in the state 902 in which the first housing 111 folded based on the shuttle gesture is identified, the electronic device 101 may display a second screen associated with the first screen on a portion of the flexible display 150 positioned on the first housing 111. For example, a boundary line between the first screen and the second screen may be formed on the first folding axis 131 in the state 902. For example, the second screen may be a screen designated by a software application providing the first screen. For example, the electronic device 101 may display the second screen including a list of a plurality of videos, in order to change a video to be displayed through the first screen. In the state 902, the electronic device 101 may identify or receive a user input for changing and/or replacing the video to be displayed in the first screen, through the second screen. Likewise, the second screen may also include a list of jump marks, in order to allow a user to jump within a video to be displayed through the first screen.

Referring to FIG. 9A, in the state 902 in which a user input for changing a video displayed on the first screen through the second screen is identified, the electronic device 101 may change the video displayed on the first screen into a video corresponding to the user input. After the state 902, the user may open the electronic device 101 using hands 813 and 814. For example, when switching to the state 903 corresponding to the unfolded state after the state 902, the electronic device 101 may remove the second screen additionally displayed in the state 902 from the flexible display 150. In the state 903, the electronic device 101 may display the first screen without the second screen.

As described above with reference to FIG. 9A, the electronic device 101 may display or provide the second screen designated by the software application providing the first screen, in response to the shuttle gesture. An embodiment in which the second screen is provided by the software application executing the first screen is described, but the embodiment is not limited thereto.

For example, the electronic device 101 may obtain the second screen by executing another software application specified by the software application executing the first screen. For example, while a first software application that executes a drawing function based on a touch input (e.g., a touch input performed on the flexible display 150 and/or the cover display 152 of FIG. 2) is being executed, the electronic device 101 may display the first screen provided by the first software application on the entire displaying region of the flexible display 150.

In response to the shuttle gesture identified while displaying the first screen based on the unfolded state, the electronic device 101 may execute a second software application (e.g., the gallery application 252 of FIG. 2) designated by the first software application. The electronic device 101 may display a second screen (e.g., a list of videos and/or images stored in the electronic device 101) provided from the second software application on different portions of the flexible display 150 folded by the shuttle gesture, together with the first screen. While the first screen and the second screen are simultaneously displayed, the electronic device 101 may receive a user input for inserting an image and/or video displayed on the second screen into media content (e.g., a picture) displayed on the first screen. In response to the user input, the electronic device 101 may add media content selected from the second screen to the media content displayed on the first screen.

For example, while displaying a first screen including a web page in the unfolded state, the electronic device 101 may identify or receive a user input for selecting a hyperlink included in the web page. The user input may include a gesture of clicking and/or touching the hyperlink. When the shuttle gesture is performed together with the user input, the electronic device 101 may display a second screen including another web page corresponding to a uniform resource location (URL) based on the hyperlink, together with the first screen. Similar to the described above with reference to FIG. 9A, the electronic device 101 may display the first screen and the second screen on each of flat portions of the flexible display 150 folded by the shuttle gesture.

An embodiment of displaying the first screen displayed on the flexible display 150 and/or the second screen designated by the software application providing the first screen is described, but the embodiment is not limited thereto. For example, the electronic device 101 identifying the shuttle gesture may display a screen designated by an operating system and/or a system process. The designated screen may include the second screen 820 for changing setting values described above with reference to FIG. 8. The designated screen may include a notification center including one or more notification messages accumulated in the electronic device 101, such as push notification. The designated screen may include recent apps including a list of screens that was displayed by the electronic device 101.

Referring to FIG. 9B, an embodiment of the electronic device 101 displaying a list of screens that was displayed by the electronic device 101 based on the shuttle gesture is illustrated. In the state 904 corresponding to the unfolded state, the electronic device 101 may display screen A provided from a specific software application. In the unfolded state displaying the screen A, when a user bends the flexible display 150 with respect to the first folding axis 131 using hands 813 and 814, the electronic device 101 may identify the shuttle gesture. Based on the shuttle gesture, the electronic device 101 may switch from the state 904 to the state 905.

In the state 905 of FIG. 9B, the electronic device 101 may display a second screen 950 including a list of screens that was displayed on a display (e.g., the flexible display 150 and/or the cover display 152 of FIG. 2) of the electronic device 101, on a portion of the flexible display 150 positioned on the first housing 111. For example, the second screen 950 may be referred to as recent apps. In the state 905, the electronic device 101 may display icons (e.g., an icon 951) indicating each of the screens and thumbnails (e.g., a thumbnail 952) corresponding to each of the screens along a vertical direction of the flexible display 150. The combination of the icon 951 and the thumbnail 952 displayed on the second screen 950 may correspond to a single screen and/or a single software application that was displayed by the electronic device 101.

In the state 905 of FIG. 9B, the electronic device 101 may identify or receive a user input for selecting any one screen included in the list of the second screen 950. In response to the user input, the electronic device 101 may replace or change the screen A displayed on a portion different from the portion of the flexible display 150 on which the second screen 950 is displayed with a screen corresponding to the user input. Referring to FIG. 9B, in the state 906 corresponding to the unfolded state after the state 905, the electronic device 101 may display a screen B corresponding to the user input on the entire displaying region of the flexible display 150. Referring to FIG. 9B, the electronic device 101 may change the screen displayed on the flexible display 150 based on the shuttle gesture.

Hereinafter, an operation of the electronic device 101 including both the flexible display 150 and the cover display (e.g., the cover display 152 of FIG. 2) will be described with reference to FIG. 10.

FIG. 10 exemplarily illustrates states 1001 and 1002 of an electronic device (e.g., a first electronic device 101-1) switched based on rotation between housings (e.g., a first housing 111, a second housing 112, and/or a third housing 113). The electronic device 101 of FIGS. 1 and 2 and/or the processor 210 of FIG. 2 may perform an operation of the first electronic device 101-1 described with reference to FIG. 10. The first electronic device 101-1 of FIG. 10 may correspond to the first electronic device 101-1 of FIG. 3A. The operation of the first electronic device 101-1 described with reference to FIG. 10 may be associated with at least one of the operations of FIG. 4.

Referring to FIG. 10, different states 1001 and 1002 of the first electronic device 101-1 including a flexible display 150 and a cover display 152 are illustrated. Although the first electronic device 101-1 including the cover display 152 positioned on a first housing 111 is exemplarily illustrated, a location of the cover display 152 is not limited to an embodiment of FIG. 10. In the unfolded state (e.g., a state 1001) checked by a plurality of sensors (e.g., the sensor 230 of FIG. 2), the first electronic device 101-1 may display a screen A having a size of the entire displaying region of the flexible display 150 on the flexible display 150.

In an embodiment, the first electronic device 101-1 including the flexible display 150 and the cover display 152 may selectively enable (or activate) at least one of the flexible display 150 and the cover display 152, in each of the unfolded state, the sub-folded state, or the folded state. For example, in the state 1001 corresponding to the unfolded state, the first electronic device 101-1 may activate the flexible display 150 and deactivate (or inactivate) the cover display 152. Activating the display by the first electronic device 101-1 mean providing the display with a voltage greater than or equal to a preset voltage for driving pixels included in the display. Deactivating the display by the first electronic device 101-1 may mean providing the display with a voltage lower than the preset voltage. For example, in the state 1001, the first electronic device 101-1 may activate the flexible display 150 and deactivate the cover display 152.

In the state 1001, in response to a shuttle gesture associated with the first housing 111 in which the cover display 152 is positioned, the first electronic device 101-1 may switch to the state 1002. For example, a user may rotate the first housing 111 with respect to the second housing 112 by using hand 1020. For example, in response to a shuttle gesture folding the flexible display 150 based on the first folding axis 131, the first electronic device 101-1 may switch to the state 1002. The first angle 141 between the first housing 111 and the second housing 112 may be included in the angle range 632 of FIG. 6B by the shuttle gesture. By activating the cover display 152, the first electronic device 101-1 that identifies the first housing 111 and the second housing 112 folded longer than a preset period based on the shuttle gesture may display the screen B associated with the screen A displayed on the flexible display 150, on the cover display 152. In the state 1002, the electronic device 101 may display the screen B on the cover display 152, together with the screen A displayed on the flexible display 150. In the state 1002, the electronic device 101 may activate both flexible display 150 and cover display 152.

In the state 1002 of activating both the flexible display 150 and the cover display 152, the first electronic device 101-1 may detect whether position of the first housing 111 and the second housing 112 is changed to position associated with the unfolded state. When the position of the first housing 111 and the second housing 112 is changed to the position associated with the unfolded state, the first electronic device 101-1 may at least temporarily cease to display the screen B on the cover display 152. For example, the first electronic device 101-1 may deactivate the cover display 152. In the above example, the first electronic device 101-1 may maintain to display the screen A by activating the flexible display 150.

In an embodiment, the screen B displayed on the cover display 152 in the state 1002 of FIG. 10 may include content associated with the screen A. For example, as described above with reference to FIGS. 7A and/or 7B, the first electronic device 101-1 may display a screen B corresponding to a notification message included in the screen A on the cover display 152. For example, the first electronic device 101-1 may display a text message received by the first electronic device 101-1 through the screen B, and receive a user's response message to the text message.

For example, as described above with reference to FIG. 8, the first electronic device 101-1 may display a screen B for adjusting setting values associated with the first electronic device 101-1 and/or the screen A on the cover display 152. For example, the first electronic device 101-1 may receive a user input for adjusting the brightness of the flexible display 150 on which the screen A is displayed and/or volume of an audio signal outputted from the first electronic device 101-1 through the screen B.

For example, as described above with reference to FIG. 9A, the first electronic device 101-1 may display a screen B designated by a software application providing the A screen, on the cover display 152. For example, through the screen B, the first electronic device 101-1 may display a prompt corresponding to a presentation provided through the screen A. For example, the first electronic device 101-1 may exclusively provide information to a user (e.g., a user of the first electronic device 101-1) viewing the cover display 152 through the screen B.

For example, as described above with reference to FIG. 9B, the first electronic device 101-1 may display the screen B including one or more screens that was displayed through a display (e.g., the flexible display 150 and/or the cover display 152) of the first electronic device 101-1 and/or a list of one or more software applications that was executed by the first electronic device 101-2, on the cover display 152.

In an embodiment, the first electronic device 101-1 activating both the flexible display 150 and the cover display 152 based on the state 1002 may switch to another state different from the state 1002. For example, when the first angle 141 between the first housing 111 and the second housing 112 is increased back to 180 ° by the hand 1020, the first electronic device 101-1 may switch to the state 1001. In the above example, the first electronic device 101-1 may cease to display the screen B on the cover display 152 by deactivating the cover display 152.

As described above, according to an embodiment, the first electronic device 101-1 may activate or deactivate at least one of the flexible display 150 and the cover display 152, based on a shuttle gesture. The first electronic device 101-1 may display different screens on each of the flexible display 150 and the cover display 152, in response to the shuttle gesture.

As described above with reference to FIGS. 1 to 10, the electronic device may display various screens associated with a first screen displayed in the unfolded state, based on the shuttle gesture. In an embodiment, the electronic device may selectively or simultaneously display various screens associated with the first screen, based on priority and/or multi-window. Hereinafter, an exemplary operation of an electronic device simultaneously displaying various screens associated with the first screen will be described with reference to FIG. 11.

FIG. 11 exemplarily illustrates states 1101, 1102, and 1103 of an electronic device 101 switched based on rotation between housings (e.g., a first housing 111, a second housing 112, and/or a third housing 113). The electronic device 101 of FIGS. 1 and 2 and/or the processor 210 of FIG. 2 may perform an operation of the electronic device 101 described with reference to FIG. 11. The operation of the electronic device 101 described with reference to FIG. 11 may be associated with at least one of the operations of FIG. 4.

Referring to FIG. 11, different states 1101, 1102, and 1103 of the electronic device 101 distinguished by a first angle 141 and/or a second angle 142 are illustrated. The electronic device 101 may identify a state (e.g., the unfolded state, the sub-folded state, and/or the folded state) of the electronic device 101 distinguished by the first angle 141 and/or the second angle 142 by using a plurality of sensors (e.g., the sensor 230 of FIG. 2). The electronic device 101 may identify or detect a shuttle gesture causing a change in at least one of the first angle 141 and the second angle 142, by using the plurality of sensors.

In the state 1101 corresponding to the unfolded state, the electronic device 101 may display a screen A on the entire displaying region of the flexible display 150. Based on a shuttle gesture identified in the unfolded state displaying the screen A, the electronic device 101 may identify one or more screens associated with the screen A. When that a plurality of screens are determined to be in association with the screen A, the electronic device 101 may determine or select at least one screen to be displayed together with the screen A on a display (e.g., the flexible display 150 and/or the cover display 152 of FIG. 2) of the electronic device 101, based on the priority in Table 1.

**[Table 1]**

| Priority | Description of the screen |
|---|---|
| 1 | Screen provided from a software application corresponding to a notification message (or notification event) included in the screen A |
| 2 | Screen provided from a software application mapped (or paired) to the screen A |
| 3 | Screen provided by a software application providing the screen A |
| 4 | Screen set (or registered or set in advance by user) by operating system and/or system process |
| 5 | Screen provided from a software application recently executed by the electronic device 101 |

Referring to Table 1, in response to a shuttle gesture identified while displaying the screen A including a visual object (e.g., the visual object 710 of FIG. 7A and/or FIG. 7B) including a notification message, the electronic device 101 may display a screen provided from a software application corresponding to the notification message by priority. For example, in a case in which a specific screen matches the screen A, the electronic device 101 may display another screen corresponding to the notification message by priority. When the notification message is not displayed and no screen matched to the screen A exists, the electronic device 101 may display a screen (e.g., the second screen 820 of FIG. 8) set by operating system based on the priority of Table 1. The priorities defined in Table 1 are exemplary only and a different order may be foreseen.

The embodiment is not limited thereto, and the electronic device 101 may simultaneously display a plurality of screens associated with the screen A on the flexible display 150, in response to identifying or checking the plurality of screens. Referring to FIG. 11, the electronic device 101 may switch to state 1102, based on the shuttle gesture identified in the state 1101 corresponding to the unfolded state. In state 1102, the electronic device 101 may display a plurality of screens (e.g., a screen B 1121 and/or a screen C 1122) associated with the screen A, on a portion of the flexible display 150 positioned on the first housing 111, which is folded by the shuttle gesture. For example, the screen B 1121 may be associated with a notification message included in the screen A. For example, the screen C 1122 may be associated with a hyperlink included in the screen A. The embodiment is not limited thereto.

In the exemplary state 1102 of FIG. 11, the electronic device 101 may display the screen B 1121 and the screen C 1122 in a portion of the flexible display 150 positioned on the first housing 111, based on a PBP layout. In the state 1102, the electronic device 101 may display the screen B 1121 and the screen C 1122, together with the screen A that was being displayed in the state 1101 before the state 1102. In the state 1102, the screen A, the screen B 1121 and the screen C 1122 may occupy different portions of the flexible display 150. Although an embodiment in which the screen B 1121 and the screen C 1122 at least partially cover the screen A is illustrated, the embodiment is not limited thereto. For example, as in the state 704 of FIG. 7B, the electronic device 101 may reduce a size of the screen A based on a size of a portion of the flexible display 150 positioned on the second housing 112 and the third housing 113.

Although an operation of the electronic device 101 identifying a shuttle gesture that was performed in any one of the first folding axis 131 or the second folding axis 132 is described, the embodiment is not limited thereto. For example, a user may fold both the first and second folding axis 131 and 132 by exceeding a preset angle and a preset period, by using the two hands 813 and 814. In the state 1103 in which both the first folding axis 131 and the second folding axis 132 are folded by the shuttle gesture, the electronic device 101 may display screens (e.g., the screen B 1121 and the screen C 1103) associated with the screen A that was displayed in the unfolded state (e.g., the state 1101), on each of the first housing 111 and the third housing 113 adjacent to each of two hands 813 and 814.

For example, in the state 1102, the electronic device 101 additionally identifying the shuttle gesture with respect to the second folding axis 132 may move any one of the screen B 1121 or the screen C 1122 that was displayed through a portion of the flexible display 150 positioned on the first housing 111 to another portion of the flexible display 150 positioned on the third housing 113, by switching to the state 1103. Although the exemplary state 1103 in which the screen C 1122 moves to another portion of the flexible display 150 positioned on the third housing 113 is illustrated, the embodiment is not limited thereto. For example, in the state 1102 in which the user selects the screen B 1121 by using the hand 814, when performing a shuttle gesture with respect to the second folding axis 132, the electronic device 101 may change a location of the screen C 1122 from among the screen B 1121 and the screen C 1122.

For example, in the state 1101 corresponding to the unfolded state, when both the first folding axis 131 and the second folding axis 132 are rotated by the shuttle gesture, the electronic device 101 may additionally display the screen B 1121 and the screen C 1122 associated with the screen A displayed in the state 1101 by switching to the state 1103. The electronic device 101 may maintain displaying the screen A on a portion of the flexible display 150 positioned on the second housing 112, and display the screen B 1121 and the screen C 1122 on each of portions of the flexible display 150 positioned on each of the first housing 111 and the third housing 113. In the state 1103, the electronic device 101 may identify or receive a user input for controlling the screen B 1121 and the screen C 1122 by using each of the two hands 813 and 814.

In each of the states 1102 and 1103 switched from the unfolded state (e.g., the state 1101) based on the shuttle gesture, the electronic device 101 may identify a gesture for switching back to the unfolded state. For example, in the state 1102, the electronic device 101 that identifies the first angle 141 increasing to a straight angle may cease to display the screen B 1121 and the screen C 1122, and display the screen A in the entire displaying region of flexible display 150, by switching to the state 1101. For example, in the state 1103, the electronic device 101 that checks a shape of the flexible display 150 unfolded flatly by the user's two hands 813 and 814 may remove the screen B 1121 and the screen C 1122 covering different portions of the screen A from the flexible display 150, by switching to the state 1101.

An embodiment of the electronic device 101 including a multi-foldable housing capable of being folded by two folding axes is described with reference to FIGS. 1 to 11, but the embodiment is not limited thereto. Hereinafter, an embodiment of an electronic device based on a multi-foldable housing including more than two folding axes will be described.

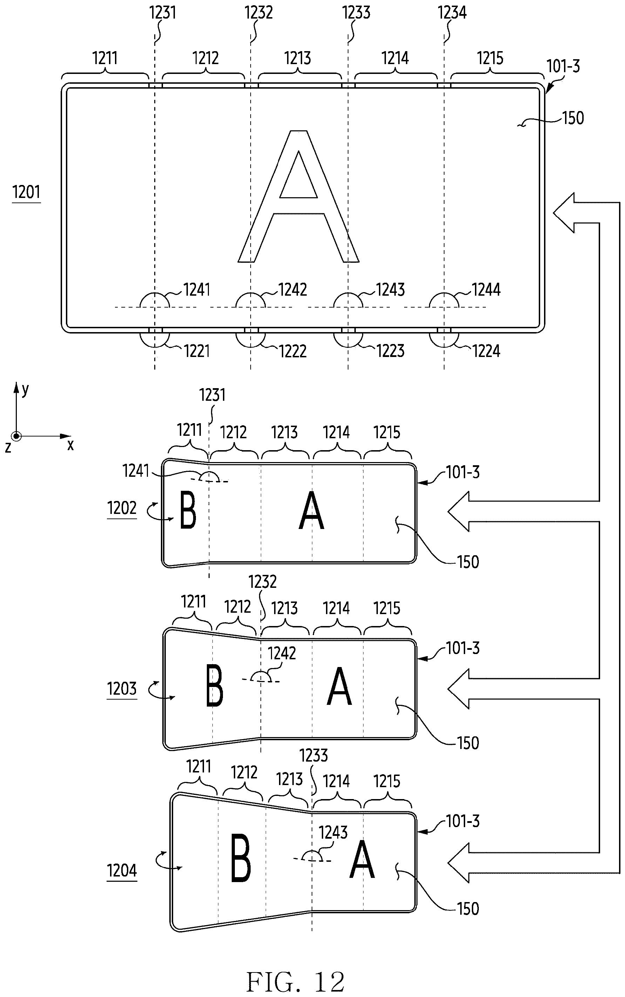

FIG. 12 illustrates an embodiment of a deformable (multi-foldable) electronic device. A third electronic device 101-3 of FIG. 12 may be an example of the electronic device 101 of FIG. 1 and/or FIG. 2. An operation of the third electronic device 101-3 described with reference to FIG. 12 may be performed by the electronic device 101 and/or the processor 210 of FIG. 2.

Referring to FIG. 12, according to an embodiment, a housing of the third electronic device 101-3 may be divided into five housings (a first housing 1211, a second housing 1212, a third housing 1213, a fourth housing 1214, and/or a fifth housing 1215). The housing of the third electronic device 101-3 may include a first hinge assembly 1221 for rotatably coupling the first housing 1211 and the second housing 1212, a second hinge assembly 1222 for rotatably coupling the second housing 1212 and the third housing 1213, a third hinge assembly 1223 for rotatably coupling the third housing 1213 and the fourth housing 1214, and a fourth hinge assembly 1224 for rotatably coupling the fourth housing 1214 and the fifth housing 1215. The number of five housings is exemplary only and a different number of housings, such as four, six, seven or eight housings may also be foreseen.

Referring to FIG. 12, a first folding axis 1231 of the first housing 1211 and the second housing 1212 may be located within the first hinge assembly 1221. A second folding axis 1232 between the second housing 1212 and the third housing 1213 may be located within the second hinge assembly 1222. A third folding axis 1233 of the third housing 1213 and the fourth housing 1214 may be located within the third hinge assembly 1223. A fourth folding axis 1234 between the fourth housing 1214 and the fifth housing 1215 may be located within the fourth hinge assembly 1224.

According to an embodiment of FIG. 12, the third electronic device 101-3 may identify rotation in the first folding axis 1231 to the fourth folding axis 1234, by using a plurality of sensors (e.g., the sensor 230 of FIG. 2). For example, the third electronic device 101-3 may identify a first angle 1241 between the first housing 1211 and the second housing 1212 , a second angle 1242 between the second housing 1212 and the third housing 1213, a third angle 1243 between the third housing 1213 and the fourth housing 1214, and a fourth angle 1244 between the fourth housing 1214 and the fifth housing 1215. The third electronic device 101-3 may identify a state of the third electronic device 101-3 divided based on the first angle 1241 to the fourth angle 1244, by using sensor data of the plurality of sensors. The state of the third electronic device 101-3 divided by the first angle 1241 to the fourth angle 1244 may include the unfolded state, the sub-folded state, and/or the folded state described with reference to FIGS. 3A to 3C.

According to an embodiment, the third electronic device 101-3 may identify a shuttle gesture based on any one of the first folding axis 1231 to the fourth folding axis 1234. In response to the shuttle gesture identified in the unfolded state (e.g., the state 1201), the third electronic device 101-3 may display a screen B associated with a screen A displayed in the unfolded state. The third electronic device 101-3 may display the screen A and the screen B, respectively, on each of flat portions of the flexible display 150 distinguished by a folding axis associated with the shuttle gesture.

For example, in the state 1201 of displaying the screen A on the entire displaying region of the flexible display 150, the third electronic device 101-3 identifying the shuttle gesture based on the first folding axis 1231 may switch to the state 1202. For example, the third electronic device 101-3 that identifies a first angle 1241 included in the angle range 612 of FIG. 6A by the shuttle gesture during the preset period may switch to the state 1202. In the state 1202, the third electronic device 101-3 may display the screen B on a portion of the flexible display 150 positioned on the first housing 1211, which is distinguished by the first folding axis 1231. The third electronic device 101-3 may maintain displaying the screen A together with the screen B displayed on a portion of the flexible display 150 positioned on the first housing 1211. For example, the screen A may occupy a portion of the flexible display 150 positioned on the second housing 1212 to the fifth housing 1215, in the state 1202.

In the state 1201 of displaying the screen A provided from the first software application based on the unfolded state, the third electronic device 101-3 may switch to the state 1203, in response to the shuttle gesture based on the second folding axis 1232. In the state 1203, the third electronic device 101-3 may display the screen B on a portion of the flexible display 150 positioned on the first housing 1211 and the second housing 1212, which is distinguished by the second folding axis 1232. The screen B displayed in the state 1203 may be displayed based on execution of a second software application designated by the first software application.

In the exemplary state 1203 of FIG. 12, the third electronic device 101-3 may display the screen A on another portion (e.g., a portion of the flexible display 150 positioned on the third housing 1213 to the fifth housing 1215) different from the portion of the flexible display 150 on which the screen B is displayed. The screen A displayed on the other portion may correspond to a portion of the screen A that was displayed on the other portion in the state 1201. The embodiment is not limited thereto, and the third electronic device 101-3 may display the screen A reduced based on a size of the other portion. The third electronic device 101-3 may display a letter box (e.g., the letter boxes 741 and 742 of FIG. 7B) together with the screen A.

Referring to FIG. 12, in the state 1201 corresponding to the unfolded state, the third electronic device 101-3 may identify a shuttle gesture based on the third folding axis 1233. The third electronic device 101-3 displaying the screen A may determine or select a portion of the flexible display 150 corresponding to the screen B associated with the screen A, based on distances on which each portion of the multi-foldable housing is moved by the shuttle gesture. For example, based on displacement of two portions of the multi-foldable housing (e.g., the combination of the first housing 1211 to the third housing 1213 and the combination of the fourth housing 1214 and the fifth housing 1215) distinguished by the third folding axis 1233, the third electronic device 101-3 may determine a location of the screen B. Referring to FIG. 12, when a distance at which the combination of the first housing 1211 to the third housing 1213 is moved is greater than a distance at which the combination of the fourth housing 1214 and the fifth housing 1215 is moved, the third electronic device 101-3 may display the screen B on a portion of the flexible display 150 positioned on the first housing 1211 to the third housing 1213, by switching to the state 1204. In the state 1204 displaying the screen B, the third electronic device 101-3 may display the screen A on another portion of the flexible display 150.

In an embodiment including four folding axes as illustrated in FIG. 12, the third electronic device 101-3 may identify a shuttle gesture performed on at least one of the folding axes, and may not respond to a shuttle gesture performed on another folding axis. For example, the third electronic device 101-3 may not respond to a shuttle gestures performed in the second folding axis 1232 and the third folding axis 1233 associated with the third housing 1213 positioned in the middle among serially connected five housings. In the above example, in response to a shuttle gesture with respect to other folding axes (e.g., the first folding axis 1231 and/or the fourth folding axis 1234) different from the second folding axis 1232 and the third folding axis 1233, the third electronic device 101-3 may display the screen B associated with the screen A displayed in the unfolded state.

When being switched back to the unfolded state from at least one of switched states 1202, 1203, and 1204 based on the shuttle gesture, the third electronic device 101-3 may cease to display the screen B, and display the screen A again in the entire displaying region of the flexible display 150. For example, the screen B may be displayed within a time period in which the flexible display 150 is partially folded by the shuttle gesture, and disappear from the flexible display 150 after the time period.

As described above, according to an embodiment, in the sub-folded state switched from the unfolded state by the shuttle gesture, the electronic device may display different screens on each of flat portions of the flexible display (e.g., the flexible display 150 of FIG. 2) folded by the shuttle gesture. In the sub-folded state, the electronic device including another display (e.g., the cover display 152 of FIG. 2) together with the flexible display may display another screen associated with a specific screen displayed on the flexible display, by activating the other display. By simultaneously displaying a plurality of screens using one or more displays, the electronic device may support multitasking based on the shuttle gesture.

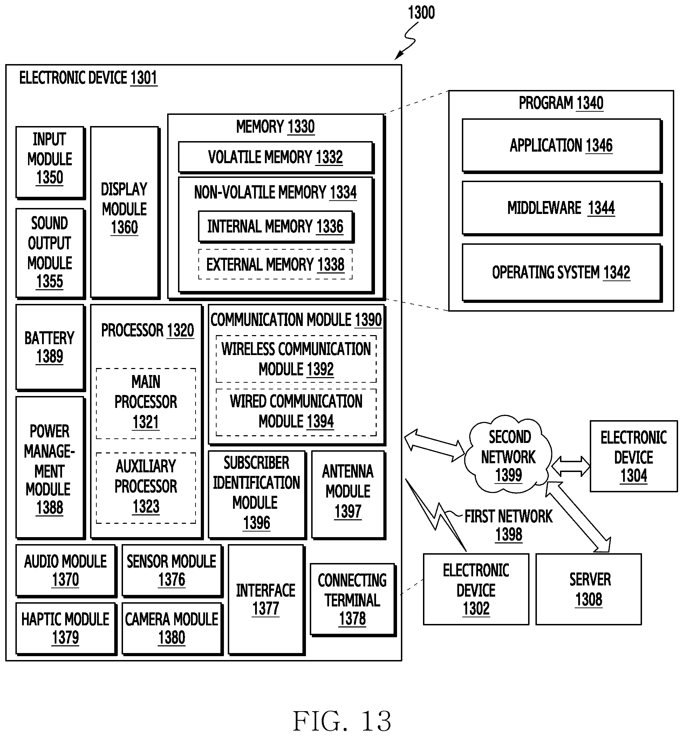

FIG. 13 is a block diagram illustrating an electronic device 1301 in a network environment 1300 according to various embodiments. Referring to FIG. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module(SIM) 1396, or an antenna module 1397. In some embodiments, at least one of the components (e.g., the connecting terminal 1378) may be omitted from the electronic device 1301, or one or more other components may be added in the electronic device 1301. In some embodiments, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to an embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, a HDMI connector, a USB connector, a SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to an embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{TM}, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 1364dB or less) for implementing mMTC, or U-plane latency (e.g., 0.5ms or less for each of downlink (DL) and uplink (UL), or a round trip of 13ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 1301 of FIG. 13 may be an example of the electronic device described with reference to FIGS. 1 to 12.

In an embodiment, a method of controlling a screen displayed on a display based on folding of a multi-foldable housing may be required. As described above, according to an embodiment, an electronic device (e.g., the electronic device 101 of FIGS. 1 to 12 and/or the electronic device 1301 of FIG. 13) may comprise a multi-foldable housing including a first housing (e.g., the first housing 111 of FIGS. 3A to 3C); a second housing rotatably coupled to the first housing (e.g., the second housing 112 of FIGS. 3A to 3C); and a third housing (e.g., the third housing 113 of FIGS. 3A to 3C) rotatably coupled to the second housing, a flexible display (e.g., the flexible display 150 of FIGS. 1, 2, 3A to 3C) including a first displaying region supported by the first housing; a second displaying region supported by the second housing; and a third displaying region supported by the third housing, a first sensor (e.g., the sensor 230 of FIG. 2) sensing a first angle between the first housing and the second housing, a second sensor (e.g., the sensor 230 of FIG. 2) sensing a second angle between the second housing and the third housing, memory (e.g., the memory 220 of FIG. 2) for storing instructions, and a processor (e.g., the processor 210 of FIG. 2) for executing the instructions by accessing the memory. The processor is configured to display, in an unfolded state of the first housing, the second housing and the third housing, a first screen executing an application on the first displaying region, the second displaying region and the third displaying region of the flexible display. The processor is configured to display the notification event in at least one displaying region of the first displaying region, the second displaying region and the third displaying region, based on occurrence of a notification event while executing the application. The processor is configured to, while displaying the notification event in the at least one displaying region, identify that the first housing and the third housing is changed from the unfolded state to a semi-folding state according to a preset angle based on the second housing. The processor is configured to display the notification event in the first displaying region or the third displaying region, based on changing to the semi-folding state.

For example, the processor may be configured to display a visual object corresponding to the notification event superimposed on the first screen, based on the occurrence of the notification event.

For example, the processor may be configured to, while identifying the second housing and the third housing maintaining position associated with the unfolded state based on the second sensor, based on identifying the first housing and the second housing folded longer than a preset period based on the first sensor, display a second screen corresponding to the notification event on the first displaying region, and the first screen on the second displaying region and the third displaying region.

For example, the processor may be configured to, while identifying the first housing and the second housing maintaining position associated with the unfolded state based on the first sensor, based on identifying the second housing and the third housing folded longer than the preset period based on the second sensor, display the second screen on the third displaying region and the first screen on the second displaying region and the first displaying region.

For example, the processor may be configured to detect, while displaying the first screen and the second screen based on the second housing and the third housing folded longer than the preset period, whether the second housing and the third housing are changed to position associated with the unfolded state. The processor may be configured to, in response to the second housing and the third housing changed to the position associated with the unfolded state, display the first screen in the first displaying region, the second displaying region, and the third displaying region of the flexible display, and cease to display the second screen associated with the notification event at least temporary.

For example, the processor may be configured to detect, while displaying the first screen and the second screen based on the first housing and the second housing folded longer than the preset period, whether the first housing and the second housing are changed to position associated with the unfolded state. The processor may be configured to, in response to the first housing and the second housing changed to the position associated with the unfolded state, display the first screen on the first displaying region, the second displaying region, and the third displaying region of the flexible display, and cease to display the second screen corresponding to the notification event at least temporary.

For example, the processor may be configured to display the first screen including a visual object associated with the notification event in the unfolded state. The processor may be configured to display, based on the second housing and the third housing folded longer than the preset period, the second screen associated with the notification event on the third displaying region.

For example, the processor may be configured to display, based on the second housing and the third housing folded longer than the preset period, the first screen, which has a size reduced based on a size of the first displaying region and the second displaying region, on the first displaying region and the second displaying region.

As described above, according to an embodiment, a method of an electronic device may comprise displaying, in an unfolded state of a first housing, a second housing and a third housing of the electronic device, a first screen executing an application in a first displaying area supported by the first housing, a second displaying area supported by the second housing and a third housing supported by the flexible display. The method may comprise, based on occurrence of a notification event while executing the application, displaying the notification event in at least one displaying region of the first displaying region, the second displaying region and the third displaying region. The method may comprise, while displaying the notification event in the at least one displaying region, identifying that the first housing and the third housing is changed from the unfolded state to a semi-folding state according to a preset angle based on the second housing. The method may comprise, based on changing to the semi-folding state, displaying the notification event in the first displaying region or the third displaying region.

For example, the identifying may comprise, while identifying the first housing and the second housing maintaining position associated with the unfolded state based on a first sensor for detecting rotation of the first housing with respect to the second housing, based on a second sensor for detecting rotation of the third housing with respect to the second housing, identifying the second housing and the third housing folded longer than a preset period.

For example, the identifying may comprise, while identifying the second housing and the third housing maintaining position associated with the unfolded state based on the second sensor, identifying the first housing and the second housing folded longer than the preset period based on the first sensor.

For example, the displaying the notification event in the first displaying region or the third displaying region may comprise detecting whether the second housing and the third housing are changed to position associated with the unfolded state. The displaying the notification event in the first displaying region or the third displaying region may comprise, in response to the second housing and the third housing changed to the position associated with the unfolded state, displaying the first screen on the first displaying region, the second displaying region and the third displaying region of the flexible display, and ceasing to display a second screen associated with the notification event at least temporary.

For example, the displaying the notification event in the first displaying region or the third displaying region may comprise detecting whether the first housing and the second housing are changed to position associated with the unfolded state. The displaying the notification event in the first displaying region or the third displaying region may comprise, in response to the first housing and the second housing changed to the position associated with the unfolded state, displaying the first screen on the first displaying region, the second displaying region and the third displaying region of the flexible display, and ceasing to display the second screen associated with the notification event at least temporary.

For example, the displaying the first screen on the first displaying region, the second displaying region and the third displaying region may comprise displaying the first screen including a visual object associated with a notification event. The displaying the notification event in the first displaying region or the third displaying region may comprise displaying the second screen associated with the notification event in the third displaying region.

For example, the displaying the notification event in the first displaying region or the third displaying region may comprise displaying the first screen in a portion of the flexible display including the second displaying region which has a size reduced based on a size of the portion.

As described above, according to an embodiment, an electronic device (e.g., the electronic device 101 of FIGS. 1 to 12 and/or the electronic device 1301 of FIG. 13) may comprise a first housing (e.g., the first housing 111 of FIGS. 3A to 3C), a second housing rotatably coupled to the first housing (e.g., the second housing 112 of 3A to 3C), a third housing rotatably coupled to the second housing (e.g., the third housing 113 of 3A to 3C), a flexible display (e.g., the flexible display 150 of FIGS. 1, 2, 3A to 3C) positioned on a first surface of the first housing, a second surface of the second housing, a the third surface of the third housing, a plurality of sensors (e.g., the sensor 230 of FIG. 2), memory for storing instructions (e.g., the memory 220 of FIG. 2), and a processor (e.g., the processor 210 of FIG. 2) for executing the instructions by accessing the memory. The processor may be configured to display a first screen having a size of the entire displaying region of the flexible display on the flexible display, in an unfolded state checked by the plurality of sensors. The processor may be configured to, while displaying the first screen in the unfolded state, display a second screen associated with the first screen on a portion of the flexible display positioned on the third surface, and display the first screen on another portion of the flexible display positioned on the first surface and the second surface, based on the second surface and the third surface folded longer than a preset period. The processor may be configured to, while displaying the first screen in the unfolded state, display the second screen on a portion of the flexible display positioned on the first surface, and display the first screen on another portion of the flexible display positioned on the second surface and the third surface, based on the first surface and the second surface folded longer than the preset period.

For example, the plurality of sensors may include a first sensor for detecting rotation of the first housing with respect to the second housing. The plurality of sensors may include a second sensor for detecting rotation of the third housing with respect to the second housing.

For example, the processor may be configured to, while identifying the second housing and the third housing that maintain a position associated with the unfolded state based on the second sensor, display the second screen on the portion of the flexible display positioned on the first surface, and display the first screen on the other portion of the flexible display positioned on the second surface and the third surface, based on identifying the first housing and the second housing folded longer than the preset period based on the first sensor.

For example, the processor may be configured to, while identifying the first housing and the second housing that maintain a position associated with the unfolded state based on the first sensor, display the second screen on the portion of the flexible display positioned on the third surface, and display the first screen on the other portion of the flexible display positioned on the second surface and the third surface, based on identifying the second housing and the third housing folded longer than the preset period based on the second sensor.

For example, the processor may be configured to detect whether the second and third surfaces are changed to position associated with the unfolded state, while displaying the first screen and the second screen, based on the second surface and the third surface folded longer than the preset period. The processor may be configured to, in response to the second surface and the third surface changed to the position associated with the unfolded state, display the first screen in the entire displaying region of the flexible display, and cease to display the second screen at least temporarily.

For example, the processor may be configured to detect whether the first surface and the second surface are changed to position associated with the unfolded state, while displaying the first screen and the second screen based on the first surface and the second surface folded longer than the preset period. The processor may be configured to, in response to the first surface and the second surface changed to the position associated with the unfolded state, display the first screen on the entire displaying region of the flexible display, and cease to display the second screen at least temporarily.

For example, the processor may be configured to display the first screen including a visual object associated with a notification message in the unfolded state. The processor may be configured to display the second screen associated with the notification message on the portion of the flexible display positioned on the third surface, based on the second surface and the third surface folded longer than the preset period.

For example, the processor may be configured to display the first screen having a size reduced based on a size of the other portion, on the other portion of the flexible display positioned on the first surface and the second surface, based on the second surface and the third surface folded longer than the preset period.

As described above, according to an embodiment, a method of an electronic device may comprise displaying a first screen having a size of the entire displaying region of the flexible display on a flexible display positioned on a first surface of a first housing of the electronic device, a second surface of a second housing rotatably coupled to the first housing, and a third surface of a third housing rotatably coupled to the second housing, in an unfolded state of the electronic device. The method may comprise, while displaying the first screen in the unfolded state, displaying a second screen associated with the first screen on a portion of the flexible display positioned on the third surface, and displaying the first screen on another portion of the flexible display positioned on the first surface and the second surface, based on the second surface and the third surface folded longer than a preset period. The method may comprise, while displaying the first screen in the unfolded state, displaying the second screen on a portion of the flexible display positioned on the first surface, and displaying the first screen on another portion of the flexible display positioned on the second surface and the third surface, based on the first surface and the second surface folded longer than the preset period.

For example, the displaying the second screen on the portion of the flexible display positioned on the third surface may comprise identifying the second housing and the third housing folded longer than the preset period based on a second sensor for detecting rotation of the third housing with respect to the second housing, while identifying the first housing and the second housing maintaining position associated with the unfolded state based on a first sensor for detecting rotation of the first housing with respect to the second housing.

For example, the displaying the second screen on the portion of the flexible display positioned on the first surface may comprise identifying the first housing and the second housing folded longer than the preset period based on the first sensor, while identifying the second housing and the third housing maintaining position associated with the unfolded state based on the second sensor.

For example, the displaying the second screen on the portion of the flexible display positioned on the third surface may comprise detecting whether the second surface and the third surface are changed to positions associated with the unfolded state. The method may comprise, in response to the second surface and the third surface changed to position associated with the unfolded state, displaying the first screen on the entire displaying region of the flexible display, and ceasing to display the second screen at least temporarily.

For example, the displaying the second screen on the portion of the flexible display positioned on the first surface may comprise detecting whether the first surface and the second surface are changed to position associated with the unfolded state. The method may comprise, in response to the first surface and the second surface changed to position associated with the unfolded state, displaying the first screen on the entire displaying region of the flexible display, and ceasing to display the second screen at least temporarily.

For example, the displaying the first screen on the entire displaying region may comprise displaying the first screen including a visual object associated with a notification message. The displaying the second screen on the portion of the flexible display positioned on the third surface may comprise displaying the second screen associated with the notification message on the portion of the flexible display positioned on the third surface.

For example, the displaying the second screen on the portion of the flexible display positioned on the third surface may comprise displaying the first screen having a size reduced based on a size of the other portion on the other portion of the flexible display positioned on the first surface and the second surface.

As described above, according to an embodiment, an electronic device (e.g., the electronic device 101 of FIGS. 1 to 12 and/or the electronic device 1301 of FIG. 13) may comprise a first housing (e.g., the first housing 111 of FIGS. 3A to 3C), a second housing (e.g., the second housing 112 of FIGS. 3A to 3C) rotatably coupled to the first housing, a third housing (e.g., the third housing 113 of FIGS. 3A to 3C) rotatably coupled to the second housing, a flexible display (e.g., the flexible display 150 of FIGS. 1, 2, 3A to 3C) positioned on a first surface of the first housing, a second surface of the second housing and a third surface of the third housing, a cover display (e.g., the cover display 152 of FIGS. 1, 2, and. 3A) positioned on a fourth surface of the first housing opposite to the first surface, a plurality of sensors (e.g., the sensor 230 of FIG. 2), memory (e.g., the memory 220 of FIG. 2) for storing instructions, and a processor (e.g., the processor 210 of FIG. 2) for executing the instructions by accessing the memory. The processor may be configured to display, in an unfolded state checked by the plurality of sensors, a first screen having a size of entire displaying region of the flexible display on the flexible display. The processor may be configured to, while displaying the first screen in the unfolded state, display, based on the first surface and the second surface which are folded longer than a preset period, a second screen associated with the first screen on the cover display together with the first screen displayed on the flexible display.

For example, the plurality of sensors may comprise a first sensor for detecting rotation of the first housing with respect to the second housing. The plurality of sensors may comprise a second sensor for detecting rotation of the third housing with respect to the second housing.

For example, the processor may be configured to, while identifying the second housing and the third housing maintaining position associated with the unfolded state based on the second sensor, based on identifying the first housing and the second housing folded longer than the preset period based on the first sensor, display the second screen on the cover display.

For example, the processor may be configured to detect, while displaying the first screen and the second screen, whether the first surface and the second surface are changed to position associated with the unfolded state. The processor may be configured to, in response to the first surface and the second surface changed to the position associated with the unfolded state, cease to display the second screen on the cover display at least temporary.

For example, the processor may be configured to display the first screen by enabling the flexible display among the flexible display or the cover display in the unfolded state. The processor may be configured to display the second screen by enabling the cover display based on the first surface and the second surface which are folded longer than the preset period.

As described above, according to an embodiment, a method of an electronic device may comprise displaying, in an unfolded state of the electronic device, a first screen having a size of entire displaying region of a flexible display on the flexible display positioned on a first surface of a first housing of the electronic device, a second surface of a second housing rotatably coupled to the first housing, and a third surface of a third housing rotatably coupled to the second housing. The method may comprise, while displaying the first screen in the unfolded state, displaying, based on the first surface and the second surface which are folded longer than a preset period, a second screen associated with the first screen on a cover display positioned on a fourth surface of the first housing opposite to the first surface, together with the first screen displayed on the flexible display.

The displaying the second screen may comprise, while identifying the second housing and the third housing maintaining position associated with the unfolded state based on a first sensor for detecting rotation of the third housing with respect to the second housing, based on identifying the first housing and the second housing folded longer than the preset period based on a second sensor for detecting rotation of the first housing with respect to the second housing, displaying the second screen on the cover display.

For example, the displaying the second screen may comprises detecting, while displaying the first screen and the second screen, whether the first surface and the second surface are changed to position associated with the unfolded state. The method may comprise, in response to the first surface and the second surface changed to the position associated with the unfolded state, ceasing to display the second screen on the cover display at least temporary.

For example, the displaying the first screen may comprise displaying the first screen by enabling the flexible display among the flexible display or the cover display in the unfolded state. The displaying the second screen may comprise displaying the second screen by enabling the cover display based on the first surface and the second surface which are folded longer than the preset period.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101, 1301), comprising:
a multi-foldable housing including:
a first housing (111, 1211);
a second housing (112, 1212) rotatably coupled to the first housing (111, 1211);
a third housing (113, 1213) rotatably coupled to the second housing (112, 1212);
a flexible display (150) including a first displaying region supported by the first housing (111, 1211), a second displaying region supported by the second housing (112, 1212) and a third displaying region supported by the third housing (113, 1213);
a first sensor (230) sensing a first angle (141, 1241) between the first housing (111, 1211) and the second housing (112, 1212);
a second sensor (230) sensing a second angle (142, 1242) between the second housing (112, 1212) and the third housing (113, 1213);
memory (220, 1330) for storing instructions; and
a processor (210, 1320) for executing the instructions by accessing the memory (220, 1330), wherein the instructions, when executed by the processor (210, 1320), cause the processor (210, 1320) to:
display, in an unfolded state of the first housing (111, 1211), the second housing (112, 1212) and the third housing (113, 1213), a first screen (712) executing an application on the first displaying region, the second displaying region and the third displaying region of the flexible display (150);
based on occurrence of a notification event while executing the application, display the notification event in at least one displaying region of the first displaying region, the second displaying region and the third displaying region;
while displaying the notification event in the at least one displaying region, identify that at least one of the first housing (111, 1211) and the third housing (113, 1213) is changed from the unfolded state to a semi-folding state according to a preset angle based on the second housing (112, 1212); and
based on changing to the semi-folding state, display the notification event in the first displaying region or the third displaying region.

2. The electronic device (101, 1301) of claim 1, wherein the processor (210, 1320) is configured to:
based on the occurrence of the notification event, display a visual object (710) corresponding to the notification event superimposed on the first screen (712).

3. The electronic device (101, 1301) of claim 1 or claim 2, wherein the instructions further cause the processor (210, 1320) to:
while identifying the second housing (112, 1212) and the third housing (113, 1213) maintaining a position associated with the unfolded state based on the second sensor (230), based on identifying the first housing (111, 1211) and the second housing (112, 1212) being folded longer than a preset period based on the first sensor (230), display a second screen (720, 820, 830, 950) corresponding to the notification event on the first displaying region, and the first screen (712) on the second displaying region and the third displaying region.

4. The electronic device (101, 1301) of claim 1 or claim 2, wherein the instructions further cause the processor (210, 1320) to:
while identifying the first housing (111, 1211) and the second housing (112, 1212) maintaining a position associated with the unfolded state based on the first sensor (230), based on identifying the second housing (112, 1212) and the third housing (113, 1213) being folded longer than the preset period based on the second sensor (230), display the second screen (720, 820, 830, 950) on the third displaying region and the first screen (712) on the first displaying region and the second displaying region.

5. The electronic device (101, 1301) of any one of claims 1 to 4, wherein the instructions further cause the processor (210, 1320) to:
detect, while displaying the first screen (712) and the second screen (720, 820, 830, 950) based on the second housing (112, 1212) and the third housing (113, 1213) folded longer than the preset period, whether the second housing (112, 1212) and the third housing (113, 1213) are changed to a position associated with the unfolded state;
in response to the second housing (112, 1212) and the third housing (113, 1213) changed to the position associated with the unfolded state, display the first screen (712) in the first displaying region, the second displaying region, and the third displaying region of the flexible display (150), and cease to display the second screen (720, 820, 830, 950) associated with the notification event at least temporary.

6. The electronic device (101, 1301) of any one of claims 1 to 4, wherein the instructions further cause the processor (210, 1320) to:
detect, while displaying the first screen (712) and the second screen (720, 820, 830, 950) based on the first housing (111, 1211) and the second housing (112, 1212) folded longer than the preset period, whether the first housing (111, 1211) and the second housing (112, 1212) are changed to a position associated with the unfolded state;
in response to the first housing (111, 1211) and the second housing (112, 1212) changed to the position associated with the unfolded state, display the first screen (712) on the first displaying region, the second displaying region, and the third displaying region of the flexible display (150), and cease to display the second screen (720, 820, 830, 950) corresponding to the notification event at least temporary.

7. The electronic device (101, 1301) of any one of claims 1 to 6, wherein the instructions further cause the processor (210, 1320) to:
display the first screen (712) including a visual object (710) associated with the notification event in the unfolded state;
display, based on the second housing (112, 1212) and the third housing (113, 1213) being folded longer than the preset period, the second screen (720, 820, 830, 950) associated with the notification event on the third displaying region.

8. The electronic device (101, 1301) of any one of claims 1 to 6, wherein the instructions further cause the processor (210, 1320) to:
display, based on the second housing (112, 1212) and the third housing (113, 1213) being folded longer than the preset period, the first screen (712), which has a size reduced based on a size of the first displaying region and the second displaying region, on the first displaying region and the second displaying region.

9. A method of an electronic device (101, 1301), comprising:
displaying, in an unfolded state of a first housing (111, 1211), a second housing (112, 1212) and a third housing (113, 1213) of the electronic device (101, 1301), a first screen (712) executing an application in a first displaying area supported by the first housing (111, 1211), a second displaying area supported by the second housing (112, 1212) and a third housing (113, 1213) supported by the flexible display (150);
based on occurrence of a notification event while executing the application, displaying the notification event in at least one displaying region of the first displaying region, the second displaying region and the third displaying region;
while displaying the notification event in the at least one displaying region, identifying that at least one of the first housing (111, 1211) and the third housing (113, 1213) is changed from the unfolded state to a semi-folding state according to a preset angle based on the second housing (112, 1212); and
based on changing to the semi-folding state, displaying the notification event in the first displaying region or the third displaying region.

10. The method of claim 9, wherein the identifying comprises:
while identifying the first housing (111, 1211) and the second housing (112, 1212) maintaining a position associated with the unfolded state based on a first sensor (230) for detecting rotation of the first housing (111, 1211) with respect to the second housing (112, 1212), based on a second sensor (230) for detecting rotation of the third housing (113, 1213) with respect to the second housing (112, 1212), identifying the second housing (112, 1212) and the third housing (113, 1213) being folded longer than a preset period.

11. The method of claim 9, wherein the identifying comprises:
while identifying the second housing (112, 1212) and the third housing (113, 1213) maintaining a position associated with the unfolded state based on a second sensor (230) for detecting rotation of the second housing (112, 1212) with respect to the third housing (113, 1213), identifying the first housing (111, 1211) and the second housing (112, 1212) being folded longer than a preset period based on a first sensor (230) for detecting rotation of the first housing (111, 1211) with respect to the second housing (112, 1212).

12. The method of any one of claims 9 to 11, wherein the displaying the notification event in the third displaying region comprises:
detecting whether the second housing (112, 1212) and the third housing (113, 1213) are changed to a position associated with the unfolded state;
in response to the second housing (112, 1212) and the third housing (113, 1213) being changed to the position associated with the unfolded state, displaying the first screen (712) on the first displaying region, the second displaying region and the third displaying region of the flexible display (150), and ceasing to display a second screen (720, 820, 830, 950) associated with the notification event at least temporary.

13. The method of any one of claims 9 to 11, wherein the displaying the notification event in the first displaying region comprises:
detecting whether the first housing (111, 1211) and the second housing (112, 1212) are changed to a position associated with the unfolded state;
in response to the first housing (111, 1211) and the second housing (112, 1212) being changed to the position associated with the unfolded state, displaying the first screen (712) on the first displaying region, the second displaying region and the third displaying region of the flexible display (150), and ceasing to display the second screen (720, 820, 830, 950) associated with the notification event at least temporary.

14. The method of any one of claims 9 to 13, wherein the displaying the first screen (712) on the first displaying region, the second displaying region and the third displaying region comprises:
displaying the first screen (712) including a visual object (710) associated with a notification event,
wherein the displaying the notification event in the first displaying region or the third displaying region comprises:
displaying the second screen (720, 820, 830, 950) associated with the notification event in the first displaying region or the third displaying region.

15. The method of any one claims 9 to 14, wherein the displaying the notification event in the first displaying region or the third displaying region comprises:
displaying the first screen (712) having a size reduced based on a size of a portion of the flexible display (150) including the second displaying region.
